(19) Europäisches Patentamt
European Patent Office
Office européen des brevets

(11) **EP 2 924 779 B1**

(12) **EUROPEAN PATENT SPECIFICATION**

(45) Date of publication and mention
of the grant of the patent:
**19.06.2019 Bulletin 2019/25**

(51) Int Cl.:
$C22C\ 24/00^{(2006.01)}$    $C22C\ 1/04^{(2006.01)}$
$C22C\ 32/00^{(2006.01)}$    $H01G\ 11/06^{(2013.01)}$
$H01G\ 11/32^{(2013.01)}$    $H01G\ 11/66^{(2013.01)}$
$C22C\ 30/04^{(2006.01)}$    $H01M\ 4/134^{(2010.01)}$
$H01M\ 4/38^{(2006.01)}$    $H01M\ 4/62^{(2006.01)}$
$H01M\ 10/052^{(2010.01)}$    $H01M\ 4/36^{(2006.01)}$
$H01M\ 4/583^{(2010.01)}$    $H01M\ 4/587^{(2010.01)}$

(21) Application number: **13857560.0**

(22) Date of filing: **19.11.2013**

(86) International application number:
**PCT/JP2013/081114**

(87) International publication number:
**WO 2014/080885 (30.05.2014 Gazette 2014/22)**

(54) **NEGATIVE ELECTRODE FOR ELECTRICAL DEVICE, AND ELECTRICAL DEVICE USING SAME**

NEGATIVELEKTRODE FÜR EINE ELEKTRISCHE VORRICHTUNG UND ELEKTRISCHE VORRICHTUNG DAMIT

ÉLECTRODE NÉGATIVE POUR DISPOSITIF ÉLECTRIQUE ET DISPOSITIF ÉLECTRIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012 JP 2012256930**

(43) Date of publication of application:
**30.09.2015 Bulletin 2015/40**

(73) Proprietor: **NISSAN MOTOR CO., LTD.
Yokohama-shi,
Kanagawa 220-8623 (JP)**

(72) Inventors:
• **MIKI, Fumihiro
Atsugi-shi
Kanagawa 243-0123 (JP)**
• **WATANABE, Manabu
Atsugi-shi
Kanagawa 243-0123 (JP)**
• **YAMAMOTO, Kensuke
Atsugi-shi
Kanagawa 243-0123 (JP)**
• **SANADA, Takashi
Atsugi-shi
Kanagawa 243-0123 (JP)**
• **CHIBA, Nobutaka
Atsugi-shi
Kanagawa 243-0123 (JP)**

(74) Representative: **Hoefer & Partner Patentanwälte mbB
Pilgersheimer Straße 20
81543 München (DE)**

(56) References cited:
WO-A1-2004/004031    JP-A- 2000 113 885
JP-A- 2004 311 429    JP-A- 2007 149 604
JP-A- 2008 016 446    US-A1- 2010 119 942
US-A1- 2010 270 497

• M. A. AL-MAGHRABI ET AL: "A Combinatorial Study of the Sn-Si-C System for Li-Ion Battery Applications", JOURNAL OF THE ELECTROCHEMICAL SOCIETY, vol. 159, no. 6, 2 April 2012 (2012-04-02), page A711, XP055135648, ISSN: 0013-4651, DOI: 10.1149/2.075206jes

**Description**

TECHNICAL FIELD

The present invention relates to a negative electrode for an electrical device, and to an electrical device using the same. The negative electrode for an electrical device and the electrical device using the same are used, for example, as a secondary battery, a capacitor and the like for a driving power supply and an auxiliary power supply for a motor of a vehicle such as an electric vehicle, a fuel cell electric vehicle and a hybrid electric vehicle.

BACKGROUND ART

In recent years, in order to cope with the air pollution and the global warming, it is sincerely desired that the amount of carbon dioxide be reduced. In the automobile industry, expectations are centered on reduction of an emission amount of carbon dioxide by introduction of an electric vehicle (EV) and a hybrid electric vehicle (HEV). Thus, development of an electrical device such as a secondary battery for driving a motor, the electrical device serving as a key for practical use of these vehicles, is assiduously pursued.

It is required that the secondary battery for driving a motor have extremely high output characteristics and high energy in comparison with lithium ion secondary battery for general use in a cellular phone, a notebook computer and the like. Hence, a lithium ion secondary battery having the highest theoretical energy among all of the batteries has attracted attention, and development thereof is rapidly advanced at present.

In general, the lithium ion secondary battery has a configuration, in which a positive electrode and a negative electrode are connected to each other while interposing an electrolyte layer therebetween, and are housed in a battery case, the positive electrode having a positive electrode active material and the like coated on both surfaces of a positive electrode current collector by using a binder, and the negative electrode having a negative electrode active material and the like coated on both surfaces of a negative electrode current collector by using a binder.

Heretofore, for the negative electrode of the lithium ion secondary battery, a carbon/graphite-based material advantageous in terms of a lifetime of a charge/discharge cycle and cost has been used. However, in the carbon/graphite-based negative electrode material, charge/discharge is performed by occlusion/discharge of lithium ions into/from graphite crystals, and accordingly, there is a disadvantage that a charge/discharge capacity equal to or more than a theoretical capacity of 372 mAh/g, which is obtained from $LiC_6$ that is a maximum lithium-introduced compound, cannot be obtained. Therefore, it is difficult to obtain a capacity and an energy density, which satisfy a practical level of usage for a vehicle, by the carbon/ graphite-based negative electrode material.

As opposed to this, in a battery using a material, which is alloyed with Li, for the negative electrode, an energy density thereof is enhanced in comparison with the conventional carbon/ graphite-based negative electrode material, and accordingly, such a material is expected as a negative electrode material in the usage for the vehicle. For example, a Si material occludes/discharges 4.4 mol of lithium ions per 1 mol as in the following Reaction formula (1) in the charge/discharge, and in $Li_{22}Si_5 (= L1_{4.4}Si)$, a theoretical capacity thereof is 2100 mAh/g. Moreover, in a case of calculating such a theoretical capacity per weight of Si, the Si material has an initial capacity of no less than 3200 mAh/g (refer to Comparative reference example 29 of Reference example C).

[Chem. 1]

$$Si + 4.4Li^+ + e^- \leftrightarrow Li_{4.4}Si \dots \qquad (A)$$

However, in the lithium ion secondary battery using the material, which is alloyed with Li, for the negative electrode, expansion/contraction in the negative electrode at a time of the charge/discharge is large. For example, volume expansion in the case of occluding the Li ions is approximately 1.2 times in the graphite material, and meanwhile, in an event where Si and Li are alloyed with each other, the Si material makes transition from an amorphous state to a crystal state and causes a large volume change (approximately four times), and accordingly, there has been a problem of lowering a cycle lifetime of the electrode. Moreover, in a case of a Si negative electrode active material, a capacity and cycle durability thereof are in a tradeoff relationship, and there has been a problem that it is difficult to enhance the high cycle durability while exhibiting a high capacity.

In order to solve such problems as described above, a negative electrode active material for a lithium ion secondary battery, which contains an amorphous alloy having a formula: $Si_xM_yAl_z$, is proposed (for example, refer to Patent Literature 1). Here, x, y and z in the formula represent atom percent values, x+y+z = 100, x ≥ 55, y < 22, z > 0, and M is metal composed of at least one of Mn, Mo, Nb, W, Ta, Fe, Cu, Ti, V, Cr, Ni, Co, Zr and Y. In the invention described in Patent Literature 1, in the paragraph [0018], it is described that a content of the metal M is minimized, whereby a good cycle lifetime is exhibited as well as a high capacity.

US 2010/119942 A1, JP 2007 149604 A and JP 2008 016446 A disclose a negative electrode for an electrical device, comprising a current collector; and an electrode layer containing a negative electrode active material, an electrically-conductive auxiliary agent and a binder and formed on a surface of the current collector, wherein the negative electrode active material contains an alloy.

CITATION LIST

PATENT LITERATURE

Patent Literature 1: Japanese Patent Unexamined Publication No. 2009-517850

SUMMARY OF INVENTION

TECHNICAL PROBLEM

However, in a case of a lithium ion secondary battery using a negative electrode containing the amorphous alloy having the formula: $Si_xM_yAl_z$, which is described in Patent Literature described above, it cannot be said that an initial capacity thereof is sufficient though it is claimed that this lithium ion secondary battery can exhibit good cycle characteristics. Moreover, it cannot be said that cycle characteristics of this lithium ion secondary battery are sufficient, either.

In this connection, it is an object of the present invention to provide a negative electrode for an electrical device such as a Li ion secondary battery that has a high initial capacity and exhibits good balance characteristics while maintaining high cycle characteristics.

SOLUTION TO PROBLEM

The inventors of the present invention have found that the above-described problems can be solved by applying a ternary Si-Sn-M-based alloy as a negative electrode active material and by setting elongation of an electrode layer (negative electrode active material layer) in a predetermined range, and then have accomplished the present invention based on such knowledge.

BRIEF DESCRIPTION OF DRAWINGS

FIG. 1 is a schematic cross-sectional view schematically showing an outline of a laminated flat non-bipolar lithium ion secondary battery as a typical embodiment of an electrical device according to the present invention.
FIG. 2 is a perspective view schematically showing an exterior appearance of a laminated flat lithium ion secondary battery as a typical embodiment of the electrical device according to the present invention.
FIG. 3 is a ternary composition diagram showing plotted alloy components, which are obtained in Reference example A, together with a composition range of a Si-Sn-Al-based alloy that composes a negative electrode active material contained in a negative electrode for an electrical device according to the present invention.
FIG. 4 is a ternary composition diagram showing a suitable composition range of the Si-Sn-Al-based alloy that composes the negative electrode active material contained in the negative electrode for an electrical device according to the present invention.
FIG. 5 is a ternary composition diagram showing a more suitable composition range of the Si-Sn-Al-based alloy that composes the negative electrode active material contained in the negative electrode for an electrical device according to the present invention.
FIG. 6 is a ternary composition diagram showing a still more suitable composition range of the Si-Sn-Al-based alloy that composes the negative electrode active material contained in the negative electrode for an electrical device according to the present invention.
FIG. 7 is a ternary composition diagram showing plotted alloy components, which are obtained in Reference example B, together with a composition range of a Si-Sn-V-based alloy that composes the negative electrode active material contained in the negative electrode for an electrical device according to the present invention.
FIG. 8 is a ternary composition diagram showing a suitable composition range of the Si-Sn-V-based alloy that composes the negative electrode active material contained in the negative electrode for an electrical device according to the present invention.
FIG. 9 is a ternary composition diagram showing a more suitable composition range of the Si-Sn-V-based alloy that composes the negative electrode active material contained in the negative electrode for an electrical device according to the present invention.

FIG. 10 is a ternary composition diagram showing a still more suitable composition range of the Si-Sn-V-based alloy that composes the negative electrode active material contained in the negative electrode for an electrical device according to the present invention.

FIG. 11 is a ternary composition diagram showing plotted alloy components, which are obtained in Reference example C, together with a composition range of a Si-Sn-C-based alloy that composes the negative electrode active material contained in the negative electrode for an electrical device according to the present invention.

FIG. 12 is a ternary composition diagram showing a suitable composition range of the Si-Sn-C-based alloy that composes the negative electrode active material contained in the negative electrode for an electrical device according to the present invention.

FIG. 13 is a ternary composition diagram showing a more suitable composition range of the Si-Sn-C-based alloy that composes the negative electrode active material contained in the negative electrode for an electrical device according to the present invention.

FIG. 14 is a ternary composition diagram showing a far more suitable composition range of the Si-Sn-C-based alloy that composes the negative electrode active material contained in the negative electrode for an electrical device according to the present invention.

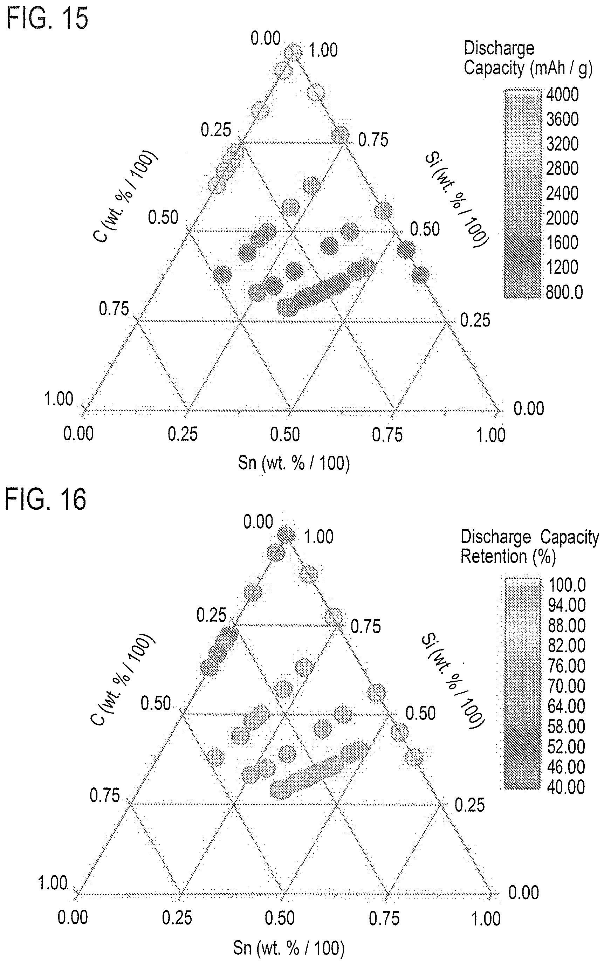

FIG. 15 is a diagram showing an influence of a negative electrode active material alloy composition, which is given to initial discharge capacities of batteries obtained in Reference examples and Comparative reference examples.

FIG. 16 is a diagram showing an influence of the negative electrode active material alloy composition, which is given to discharge capacity retention rates in 50th cycles of the batteries obtained in Reference examples and Comparative reference examples.

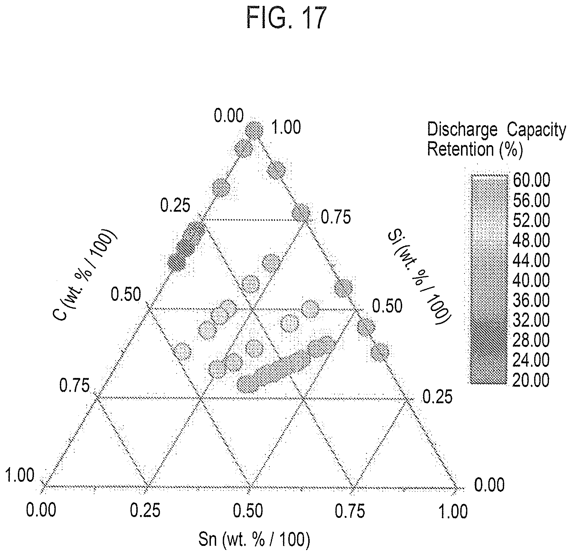

FIG. 17 is a diagram showing an influence of the negative electrode active material alloy composition, which is given to discharge capacity retention rates in 100th cycles of the batteries obtained in Reference examples and Comparative reference examples.

FIG. 18 is a graph showing relationships between elongations of electrode layers and the improvement rates of the discharge capacity in Examples.

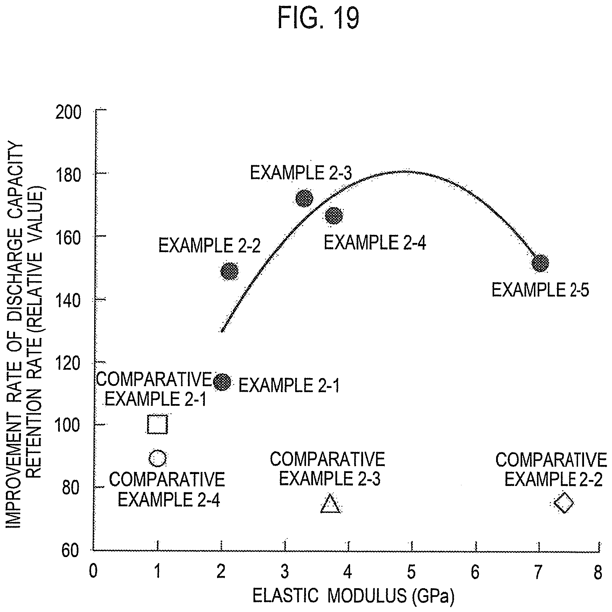

FIG. 19 is a graph showing relationships between E-elastic moduli of binders contained in the electrode layers and the improvement rate of the discharge capacity of the batteries in Examples.

FIG. 20 shows plots indicating relationships between elastic elongations of negative electrode current collectors and the improvement rates of the discharge capacity of the batteries in Examples.

FIG. 21 is a graph showing relationships between contents of Si alloys and energy densities or the discharge capacity retention rates in Examples.

DESCRIPTION OF EMBODIMENTS

While referring to the drawings, a description is made below of embodiments of a negative electrode for an electrical device according to the present invention and of an electrical device using the same. However, the technical scope of the present invention should be determined based on the description of the scope of claims, and is not limited only to the following embodiments. Note that the same reference numerals are assigned to the same elements in the description of the drawings, and duplicate descriptions are omitted. Moreover, dimensional ratios of the drawings are exaggerated for convenience of explanation, and are sometimes different from actual ratios.

A negative electrode for an electrical device according to the present invention includes: a current collector; and an electrode layer containing a negative electrode active material, an electrically-conductive auxiliary agent and a binder and formed on a surface of the current collector. Moreover, the negative electrode is characterized in that the negative electrode active material contains an alloy (hereinafter, simply referred to as an "alloy" or a "Si alloy" represented by a following formula (1), and elongation ($\delta$) of the electrode layer is within a range of 1.29 < $\delta$ <1.70%.

[Chem. 2]

$$Si_xSn_yM_zA_a \qquad (1)$$

In the above-described formula (1), M is at least one metal selected from the group consisting of Al, V, C and combinations thereof. A described above is inevitable impurity, x, y, z and a, which are described above, represent values of mass percent, where 0 < x < 100, 0 < y < 100, 0 < z < 100, 0 ≤ a < 0.5 and x+y+z+a = 100.

In accordance with the present invention, in an event where Si and Li are alloyed, the ternary Si-Sn-M-based alloy is applied, whereby a function that amorphous-crystalline phase transition is suppressed to enhance the cycle lifetime is obtained. Moreover, the elongation of the electrode layer is set within the predetermined range. Here, the elongation of the electrode layer is increased more than a lower limit of the predetermined range, whereby electrode constituents other than the negative electrode active material can follow the volume change by the expansion/contraction of the negative electrode active material, which are caused by the charge/discharge, and a volume change of a whole of the electrode can be suppressed. Moreover, the elongation of the electrode layer is reduced more than an upper limit of the predetermined range, whereby the elongation of the electrode layer can be suppressed from hindering the reaction (insertion/elimination) of the lithium ions to the negative electrode active material, the reaction following the charge/discharge. As a result of such multiple functions as described above, the negative electrode according to the present invention can obtain a useful effect of having a high initial capacity and having high capacity/high cycle durability, and in particular, a high improvement rate of the discharge capacity.

A description is made below of a basic configuration of an electrical device, to which the negative electrode for an electrical device according to the present invention is applicable, with reference to the drawings. In this embodiment, as the electrical device, a lithium ion secondary battery is exemplified and described. Note that the "electrode layer" in the present invention stands for a combination layer including the negative electrode active material, the electrically-conductive auxiliary agent, and the binder; however, in the description of this specification, the electrode layer is sometimes referred to as a "negative electrode active material layer". In a similar way, an electrode layer on the positive electrode side is sometimes referred to as a "positive electrode active material layer".

First, in a negative electrode for a lithium ion secondary battery, which is a typical embodiment of the negative electrode for an electrical device according to the present invention, and in a lithium ion secondary battery using the same, a voltage of a cell (single cell layer) is large, and a high energy density and a high output density can be achieved. Therefore, the lithium ion secondary battery, which uses the negative electrode for a lithium ion secondary battery according to this embodiment, is excellent as those for a vehicle-driving power supply and a vehicle auxiliary power supply. As a result, the lithium ion secondary battery can be suitably used as a lithium ion secondary battery for the vehicle-driving power supply or the like. Besides, the lithium ion secondary battery according to this embodiment is sufficiently applicable also as a lithium ion secondary battery oriented for a portable instrument such as a cellular phone.

That is to say, the lithium ion secondary battery, which serves as a target of this embodiment, just needs to use the negative electrode for a lithium ion secondary battery according to this embodiment, which will be described below, and particular limitations should not be imposed on other constituents.

For example, in a case of distinguishing the above-described lithium ion secondary battery based on form/structure thereof, the lithium ion secondary battery is applicable to any form/structure heretofore known in public, which include those of a laminated-type (flat-type) battery, a wound-type (cylinder-type) battery and the like. The laminated-type (flat-type) battery structure is employed, whereby long-term reliability can be ensured by a sealing technology such as simple thermocompression, and this is advantageous in terms of cost and workability.

Moreover, in a case of viewing the lithium ion secondary battery in terms of an electric connection mode (electrode structure) therein, the negative electrode according to this embodiment is applicable to both of a non-bipolar (internal parallel connection-type) battery and a bipolar (internal serial connection-type) battery.

In a case of distinguishing the lithium ion secondary battery based on a type of an electrolyte layer therein, the negative electrode according to this embodiment is applicable to all types of electrolyte layers heretofore known in public, which are provided in a solution electrolyte battery in which a solution electrolyte such as a non-aqueous electrolytic solution is used for an electrolyte layer, a polymer battery in which a polymer electrolyte is used for an electrolyte layer, and the like. The polymer battery is further classified into a gel electrolyte battery using a polymer gel electrolyte (also simply referred to as a gel electrolyte) and a solid polymer (all solid) battery using a solid polymer electrolyte (also simply referred to as a polymer electrolyte).

Hence, in the following description, by using the drawings, there is briefly described a non-bipolar (internal parallel connection-type) lithium ion secondary battery using the negative electrode for a lithium ion secondary battery according to this embodiment. However, the technical scope of the lithium ion secondary battery according to this embodiment should not be limited to these.

<Overall structure of battery>

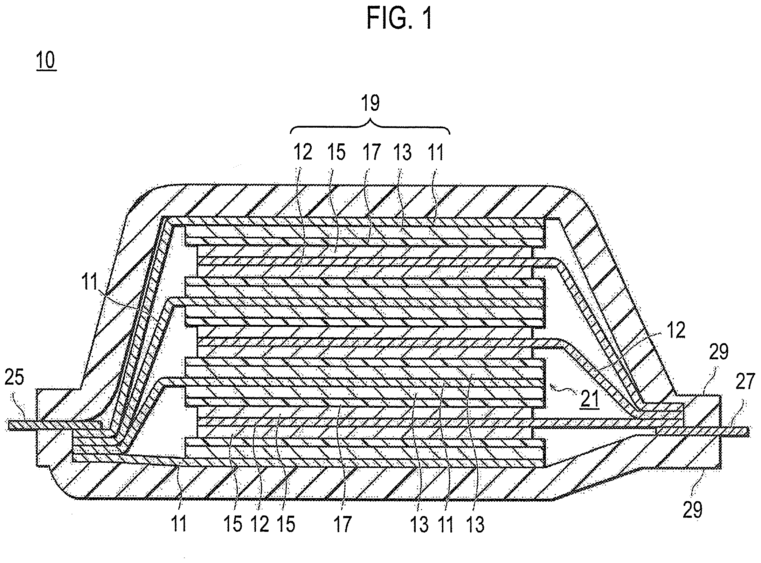

FIG. 1 is a schematic cross-sectional view schematically showing an overall structure of a flat (laminated) lithium ion secondary battery (hereinafter, also simply referred to as a "laminated battery") as a typical embodiment of an electrical device of the present invention.

As shown in FIG. 1, a laminated battery 10 of this embodiment has a structure, in which a substantially rectangular power generation element 21 in which a charge/discharge reaction actually progresses is sealed in an inside of laminated sheets 29 as package bodies. Here, the power generation element 21 has a configuration, in which positive electrodes each having positive electrode active material layers 13 arranged on both surfaces of a positive electrode current collector 11, electrolyte layers 17, and negative electrodes each having negative electrode active material layers 15 arranged on both surfaces of a negative electrode current collector 12 are laminated on one another. Specifically, the negative electrodes, the electrolyte layers and the positive electrodes are laminated on one another in this order so that one of the positive electrode active material layers 13 and the negative electrode active material layer 15 adjacent thereto can be opposed to each other while interposing the electrolyte layer 17 therebetween.

In such a way, the positive electrode, the electrolyte layer and the negative electrode, which are adjacent to one another, compose one single cell layer 19. Hence, it can also be said that the laminated battery 10 shown in FIG. 1 has a configuration composed in such a manner that a plurality of the single cell layers 19 are electrically connected in parallel to one another by being laminated on one another. Note that, with regard to each of the outermost positive electrode current collectors located on both outermost layers of the power generation element 21, the positive electrode active material layer 13 is arranged only on one surface thereof; however, such active material layers may be provided on both surfaces thereof. That is to say, each of the outermost current collectors is not formed as a current collector, which has the active material layer provided only on one surface thereof and is dedicated for the outermost layer, but such a current collector having the active material layers on both surfaces thereof may be directly used as each of the outermost current collectors. Moreover, such arrangement of the positive electrode and the negative electrode is inverted from that of FIG. 1, whereby the outermost negative electrode current collectors may be located on both outermost layers of the power generation element 21, and the negative electrode active material layer may be arranged on one surface or both surfaces of each of the outermost negative electrode current collector.

The positive electrode current collectors 11 and the negative electrode current collectors 12 have structures, in which a positive electrode current collector plate 25 and a negative electrode current collector plate 27, which are to be conducted to the respective electrodes (the positive electrodes and the negative electrodes), are attached thereto, respectively, and are drawn out to an outside of the laminated sheets 29 like being sandwiched by end portions of the laminated sheets 29. The positive electrode current collector plate 25 and the negative electrode current collector plate 27 may be attached to the positive electrode current collectors 11 and negative electrode current collectors 12 of the respective electrodes by ultrasonic welding, resistance welding or the like while interposing a positive electrode lead and a negative electrode lead (not shown) therebetween, respectively, according to needs.

The lithium ion secondary battery described above has a feature in the negative electrode, which contains a ternary Si-Sn-M-based alloy as a negative electrode active material, and further, in which elongation ($\delta$) of the negative electrode active material layer is in a range of $1.29 < \delta < 1.70\%$. A description is made below of main constituent members of the battery, which includes the negative electrode concerned.

<Active material layer>

The active material layers 13 or 15 contain an active material, and further contain other additives according to needs.

[Positive electrode active material layer]

The positive electrode active material layers 13 contain a positive electrode active material.

(Positive electrode active material)

As the positive electrode active material, for example, there are mentioned a lithium-transition metal composite oxide, a lithium-transition metal phosphate compound, a lithium-transition metal sulfate compound, a solid solution system, a ternary system, a NiMn system, a NiCo system, a spinel Mn system and the like.

As the lithium-transition metal composite oxide, for example, there are mentioned $LiMn_2O_4$, $LiCoO_2$, $LiNiO_2$, $Li(Ni, Mn, Co)O_2$, $Li(Li, Ni, Mn, Co)O_2$, $LiFePO_4$, those in which other elements are partially substituted for these transition metals, and the like.

As the solid solution system, for example, there are mentioned: $xLiMO_2 \cdot (1-x)Li_2NO_3$ ($0 < x < 1$, M is one or more of transition metals in which an average oxidation state is 3+; N is one or more of transition metals in which an average oxidation state is 4+), $LiRO_2$-$LiMn_2O_4$ (R = transition metal element such as Ni, Mn, Co and Fe); and the like.

As the ternary system, a nickel/cobalt/manganese-based (composite) positive electrode material and the like are mentioned.

As the NiMn system, $LiNi_{0.5}Mn_{1.5}O_4$ and the like are mentioned.

As the NiCo system, $Li(NiCo)O_2$ and the like are mentioned.

As the spinel Mn system, $LiMn_2O_4$ and the like are mentioned.

Depending on cases, two or more of the positive electrode active materials may be used in combination. From viewpoints of a capacity and output characteristics, the lithium-transition metal composite oxide is preferably used as the positive electrode active material. Note that, as a matter of course, positive electrode active materials other than those described above may be used. In a case where particle diameters optimum for developing the respective effects intrinsic to the active materials are different from one another, such active materials with the particle diameters optimum for developing the effects intrinsic thereto just need to be blended and used, and it is not necessarily necessary to uniform the particle diameters of all of the active materials.

A mean particle diameter of the positive electrode active material contained in the positive electrode active material layer 13 is not particularly limited; however, are preferably 1 to 30 $\mu$m, more preferably 5 to 20 $\mu$m from a viewpoint of enhancement of the output. Note that, in this specification, the "particle diameter" stands for a maximum distance among distances, each of which is between arbitrary two points on outlines of the active material particles (observed surfaces) observed by using observing means such as a scanning electron microscope (SEM) and a transmission electron microscope (TEM). Moreover, in this specification, as a value of the "mean particle diameter", a value is employed, which is calculated as a mean value of particle diameters of particles observed in several to several ten visual fields by using the observing means such as the scanning electron microscope (SEM) and the transmission electron microscope (TEM). Particle diameters and mean particle diameters of the other constituent components can also be defined in a similar way.

(Binder for positive electrode)

The positive electrode active material layer contains a binder. The binder for use in the positive electrode active material layer is not particularly limited; however, for example, as the binder, the following materials are mentioned, which are: a thermoplastic polymer such as polyethylene, polypropylene, polyethylene terephthalate (PET), polyether nitrile (PEN), polyacrylonitrile, polyimide, polyamide, polyamide imide, cellulose, carboxymethylcellulose (CMC), an ethylene-vinyl acetate copolymer, polyvinyl chloride, styrene-butadiene rubber (SBR), isoprene rubber, butadiene rubber, ethylene propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); polyvinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); and epoxy resin. Among them, polyvinylidene fluoride, polyimide, styrene-butadiene rubber, carboxymethyl cellulose, polypropylene, polytetrafluoroethylene, polyacrylonitrile, polyamide, and polyamide imide are more preferable. These suitable binders are excellent in heat resistance, further have extremely wide potential windows, are stable at both of the positive electrode potential and the negative electrode potential, and are usable for the positive electrode active material layer. These binders may be each used singly, or two or more thereof may be used in combination.

A content of the binder contained in the positive electrode active material layer is not particularly limited as long as the binder can bind the positive electrode active materials; however, is preferably 0.5 to 15 mass%, more preferably 1 to 10 mass% with respect to the positive electrode active material layers.

As other additives which can be contained in the positive electrode active material layers, for example, there are mentioned an electrically-conductive auxiliary agent, electrolyte salt (lithium salt), an ion conductive polymer, and the like.

(Electrically-conductive auxiliary agent for positive electrode)

The positive electrode active material layer contains an electrically-conductive auxiliary agent. The electrically-conductive auxiliary agent for the positive electrode, which is mentioned herein, refers to an additive to be compounded in order to enhance conductivity of the positive electrode active material layer. As this electrically-conductive auxiliary agent, there are mentioned: carbon powder such as carbon black including short chain-like carbon black (short chain-like acetylene black and the like), long chain-like carbon black (long chain-like acetylene black), Ketjen Black (furnace black), channel black and thermal black, and such as graphite including natural graphite and artificial graphite; carbon fiber such as vapor deposited carbon fiber or liquid deposited carbon fiber (carbon nanotube (CNT), graphite fiber and the like) and carbon nanofiber; and carbon materials such as Vulcan, Black Pearl, carbon nano-horn, carbon nano-balloon, hard carbon, fullerene, and expanded graphite; however, it is needless to say that the electrically-conductive auxiliary agent is not limited to these. Note that the above-described carbon fiber is CNT or carbon fiber (which is graphite-like and hard carbon-like (changed depending on a burning temperature at the time of synthesis thereof)), and is capable of being synthesized by either a liquid phase method or a vapor phase method. The positive electrode active material layer contains the electrically-conductive auxiliary agent, whereby a three-dimensional electronic (conductive) network in an inside of the positive electrode active material layer is formed effectively, and this can contribute to the enhancement of the output characteristics of the battery.

A content of the electrically-conductive auxiliary agent mixed into the positive electrode active material layer ranges to be 1 mass% or more, preferably 3 mass% or more, more preferably 5 mass% or more with respect to a total amount of the positive electrode active material layer. Moreover, the content of the electrically-conductive auxiliary agent mixed into the positive electrode active material layer ranges to be 15 mass% or less preferably 10 mass% or less, more preferably 7 mass% or less with respect to the total amount of the positive electrode active material layer. Electronic conductivity of the active material itself is low, and a compounding ratio (content) of the electrically-conductive auxiliary agent in the positive electrode active material layer in which electrode resistance can be reduced by the amount of the electrically-conductive auxiliary agent is regulated within the above-described range, whereby the following effects can be developed. That is to say, without inhibiting an electrode reaction, the electronic conductivity can be sufficiently ensured, the lowering of the energy density by the lowering of the electrode density can be suppressed, and eventually, the enhancement of the energy density by the enhancement of the electrode density can be achieved.

Moreover, a conductive binding agent, which has functions of the above-described electrically-conductive auxiliary agent and binder in combination, may be used in place of these electrically-conductive auxiliary agent and binder, or alternatively, may be used in combination of one or both of these electrically-conductive auxiliary agent and binder. As the conductive binding agent, for example, already commercially available TAB-2 (made by Hohsen Corporation) can be used.

(Manufacturing method of positive electrode active material layer)

The positive electrode (positive electrode active material layer) can be formed by any method of a kneading method, a sputtering method, an evaporation method, a CVD method, a PVD method, an ion plating method, and a thermal spraying method as well as a usual method of coating slurry.

[Negative electrode active material layer]

The negative electrode active material layer 15 is characterized in that a ternary Si-Sn-M-based alloy is contained as the negative electrode active material, and further, elongation ($\delta$) of the negative electrode active material layer is in a range of $1.29 < \delta < 1.70\%$. The negative electrode active material layer of this embodiment is applied, whereby a good negative electrode for a lithium ion secondary battery, which has a high capacity and high cycle durability, is obtained. Moreover, a negative electrode having the negative electrode active material layer of this embodiment is used, whereby a high-capacity lithium ion secondary battery having good battery characteristics, which is excellent in cycle durability, and particularly, improvement rate of discharge capacity, is obtained.

(Negative electrode active material)

In this embodiment, the ternary Si-Sn-M-based alloy for use as the negative electrode active material is represented by the following Chemical formula (1).

[Chem. 3]

$$Si_xSn_yM_zA_a \qquad (1)$$

In the above-described formula (1), M is at least one metal selected from the group consisting of Al, V, C and combinations of these. Moreover, A is inevitable impurity. Furthermore, x, y, z and a represent mass% values, and in this event, the following are conditioned, which are $0 < x < 100$, $0 < y < 100$, $0 < z < 100$, $0 \leq a < 0.5$ and $x+y+z+a = 100$. Moreover, in this specification, the above-described "inevitable impurities" stand for those which are present in raw materials in the Si alloy or inevitably mixed in a manufacturing process of the Si alloy. The inevitable impurities concerned are originally unnecessary; however, an amount thereof is trace, and characteristics of the Si alloy are not affected thereby, and accordingly, the inevitable impurities are permitted.

In this embodiment, as the negative electrode active material, Sn as a first additional element and M (at least one metal selected from the group consisting of Al, V, C and combinations of these) as a second additional element are selected, whereby, in an event of Lithium alloying, amorphous-crystalline phase transition is suppressed, and the cycle lifetime can be enhanced. Moreover, the negative electrode active material in this embodiment obtains a higher capacity than the conventional negative electrode active material, for example, a carbon-based negative electrode active material.

A reason why the amorphous-crystalline phase transition is suppressed in the event of the Li alloying is that, in an event where Si and Li are alloyed in the Si material, the Si material makes transition from an amorphous state to a crystal state and causes a large volume change (approximately four times), and accordingly, particles themselves thereof are broken, and a function of the active material is lost. Therefore, the amorphous-crystalline phase transition is suppressed, whereby the breakage of the particles themselves is suppressed, the function (high capacity) of the active material can be held, and the cycle lifetime can be enhanced. Such first and second additional elements are selected, whereby a Si-alloy negative electrode active material having a high capacity and high cycle durability can be provided.

As mentioned above, M is at least one metal selected from the group consisting of Al, V, C and the combinations of these. Hence, a description is individually made of Si alloys, which are $Si_xSn_yAl_zA_a$, $Si_xSn_yV_zA_a$ and $Si_xSn_yC_zA_a$.

(Si alloy represented by $Si_xSn_yAl_zA_a$)

As mentioned above, Sn as the first additional element and Al as the second additional element are selected, whereby the above-described $Si_xSn_yAl_zA_a$ can suppresses the amorphous-crystalline phase transition and enhance the cycle lifetime in the event of the Li alloying. Moreover, in such a way, the negative electrode active material in this embodiment obtains the higher capacity than the conventional negative electrode active material, for example, the carbon-based negative electrode active material.

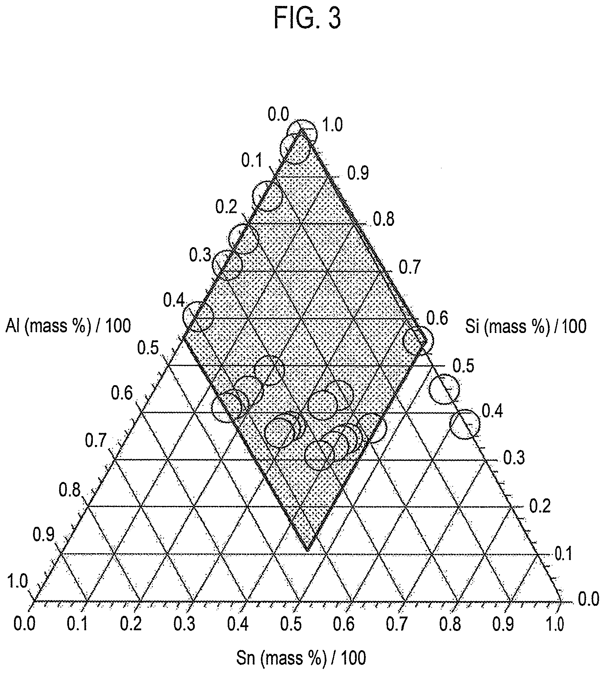

In a composition of the above-described alloy, preferably, x is 12 or more to less than 100, the above-described y is more than 0 to 45 or less, and the above-described z is more than 0 to 43 or less. Note that the composition of the alloy concerned is represented by a hatched portion of FIG. 3. The negative electrode active material in this embodiment has the above-described composition, and thereby not only develops the high capacity but also can maintain a high discharge capacity even after 50 cycles and 100 cycles.

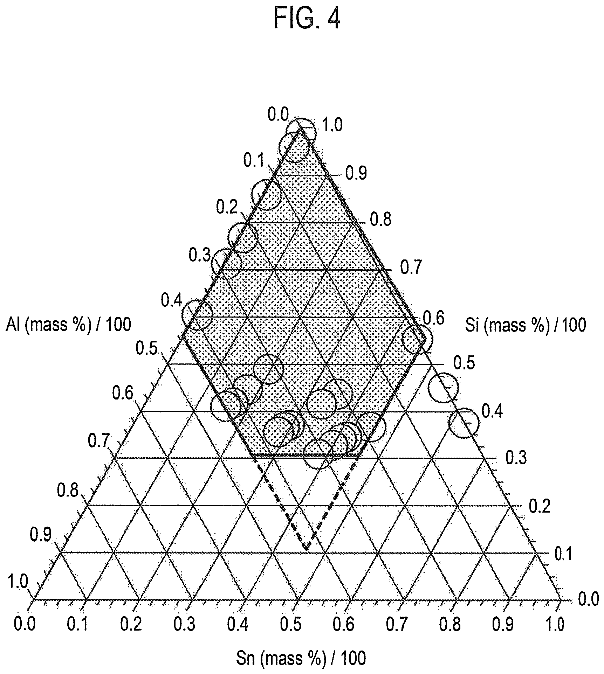

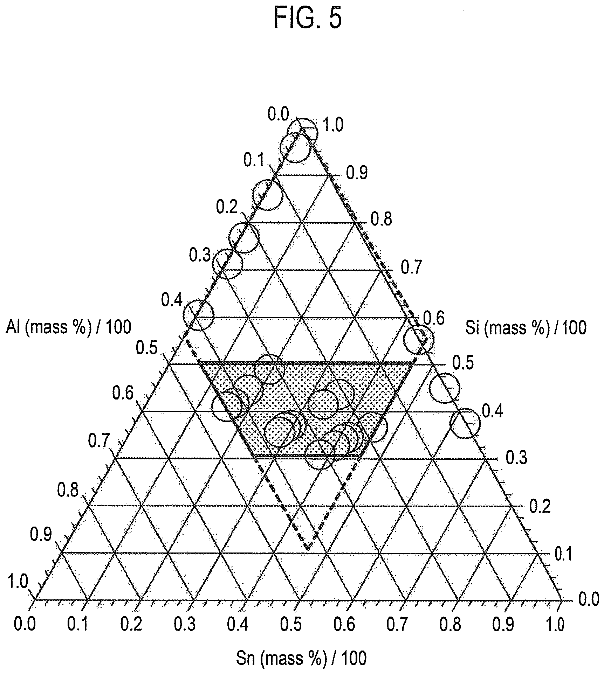

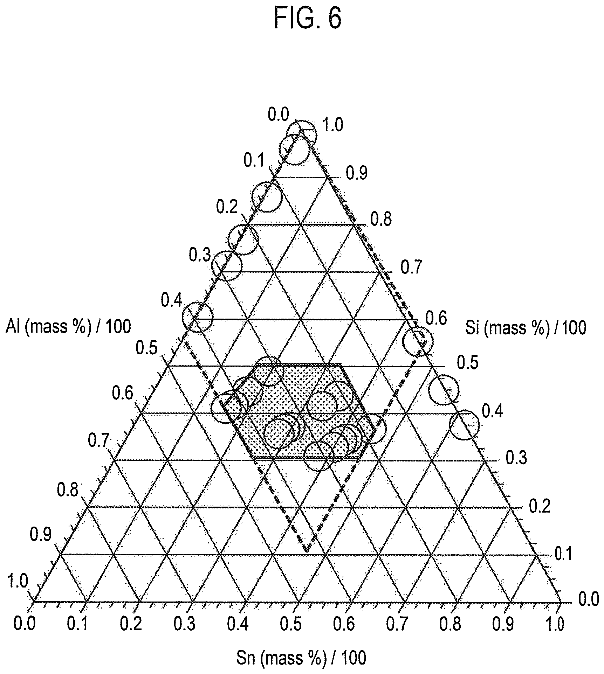

Note that, from a viewpoint of further improving the above-described characteristics of the negative electrode active material concerned, it is preferable that the above-described x be 31 or more as shown by a hatched portion of FIG. 4. Moreover, more preferably, the above-described x is set within a range of 31 to 50 as shown by a hatched portion of FIG. 5. Furthermore, still more preferably, the above-described y is set within a range of 15 to 45 and the above-described z is set within a range of 18 to 43 as shown by a hatched portion of FIG. 6. Most preferably, the above-described x is further set within a range of 16 to 45.

Note that, as mentioned above, A is the impuritise (inevitable impurities), which are derived from the raw materials and the manufacturing method and are other than the above-described three components, and the above-described a ranges as $0 \leq a < 0.5$, and preferably, ranges as $0 \leq a < 0.1$.

(Si alloy represented by $Si_xSn_yV_zA_a$)

As mentioned above, Sn as the first additional element and V as the second additional element are selected, whereby the above-described $Si_xSn_yV_zA_a$ can suppresses the amorphous-crystalline phase transition and enhance the cycle lifetime in the event of the Li alloying. Moreover, in such a way, the negative electrode active material in this embodiment obtains the higher capacity than the conventional negative electrode active material, for example, the carbon-based negative electrode active material.

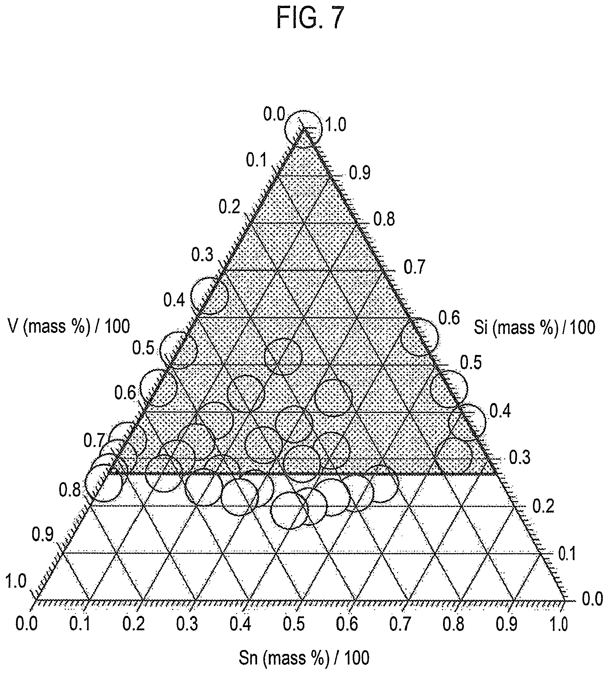

In a composition of the above-described alloy, preferably, the above-described x is 27 or more to less than 100, the above-described y is more than 0 to 73 or less, and the above-described z is more than 0 to 73 or less. Note that this numeric value range corresponds to a range shown by a hatched portion of FIG. 7. The negative electrode active material in this embodiment has the above-described composition, and thereby not only develops the high capacity but also can maintain a high discharge capacity even after 50 cycles and 100 cycles.

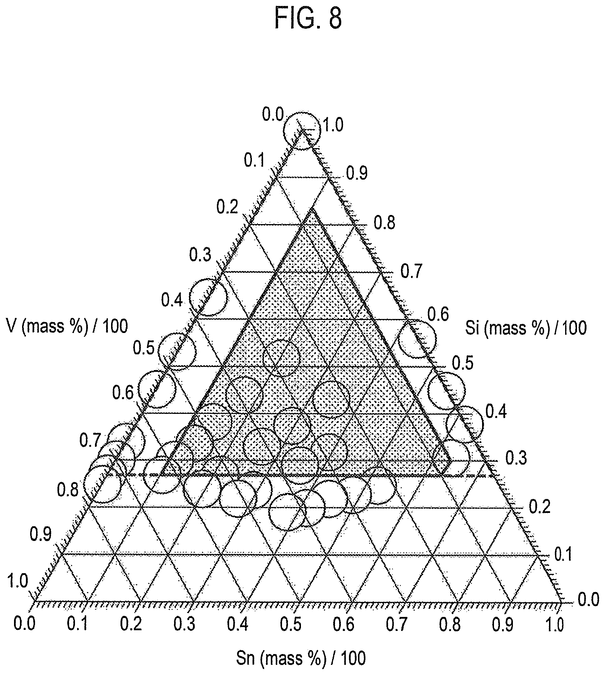

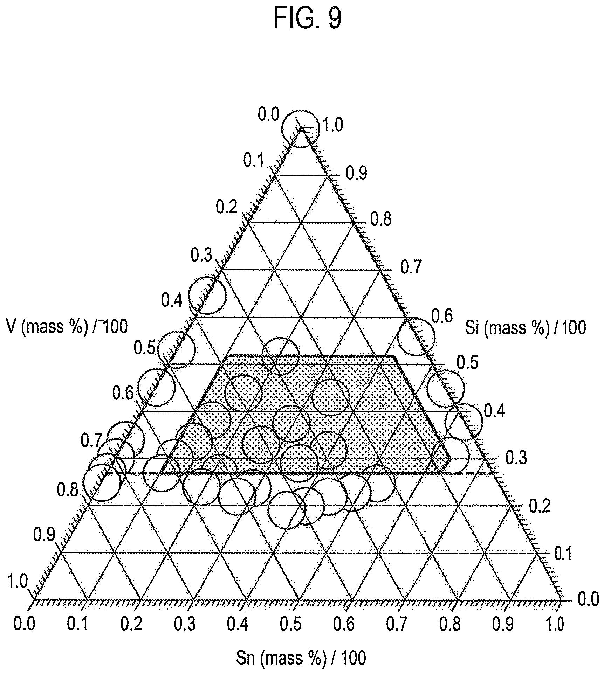

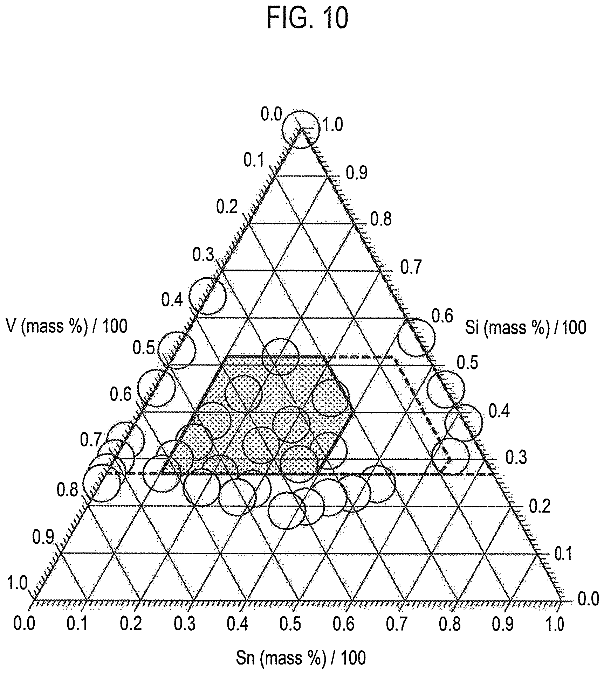

Note that, from a viewpoint of further improving the above-described characteristics of the negative electrode active material concerned, preferably, the above-described x is within a range of 27 to 84, the above-described y is within a range of 10 to 73, and the above-described z is within a range of 6 to 73. Moreover, as shown by a hatched portion of FIG. 8, more preferably, the above-described x is within a range of 27 to 84, the above-described y is within a range of 10 to 63, and the above-described z is within a range of 6 to 63. Then, as shown by a hatched portion of FIG. 9, still more preferably, the above-described x is within a range of 27 to 52. As understood from a hatched portion of FIG. 10, it is yet more preferable if the above-described y is set within a range of 10 to 52 and the above-described z is set within a range of 20 to 63, and most preferably, the above-described y is set within a range of 10 to 40.

Note that the above-described a ranges as $0 \leq a < 0.5$, and preferably, ranges as $0 \leq a < 0.1$.

(Si alloy represented by $Si_xSn_yC_zA_a$)

As mentioned above, Sn as the first additional element and C as the second additional element are selected, whereby the above-described $Si_xSn_yC_zA_a$ can suppresses the amorphous-crystalline phase transition and enhance the cycle lifetime in the event of the Li alloying. Moreover, in such a way, the negative electrode active material in this embodiment obtains the higher capacity than the conventional negative electrode active material, for example, the carbon-based negative electrode active material.

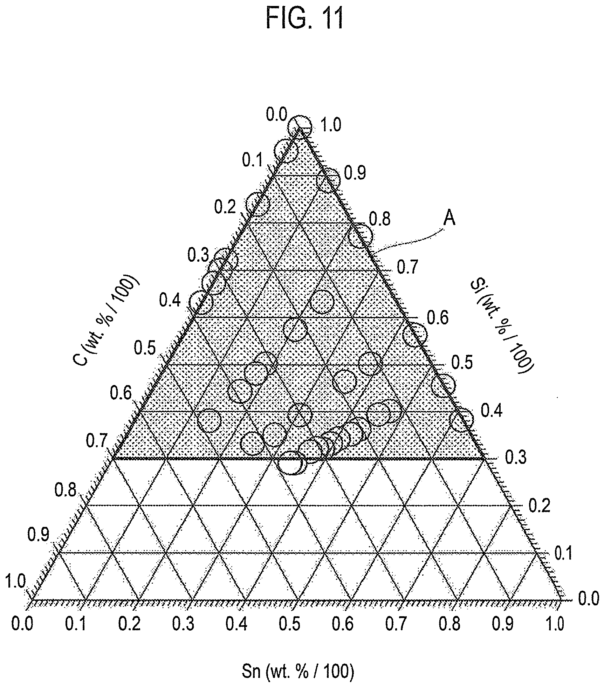

In a composition of the above-described alloy, preferably, the above-described x is 29 or more. Note that this numeric value range corresponds to a range shown by reference symbol A of FIG. 11. The negative electrode active material in this embodiment has the above-described composition, and thereby not only develops the high capacity but also can maintain a high discharge capacity even after 50 cycles and 100 cycles.

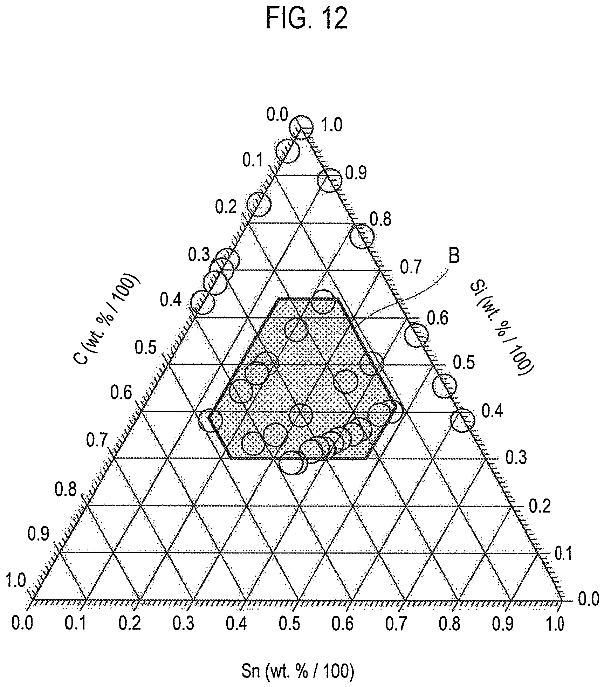

Note that, from a viewpoint of further improving the above-described characteristics of the negative electrode active material concerned, preferably, the above-described x is within a range of 29 to 63, y is within a range of 14 to 48, and the above-described z is within a range of 11 to 48. Note that this numeric value range corresponds to a range shown by reference symbol B of FIG. 12.

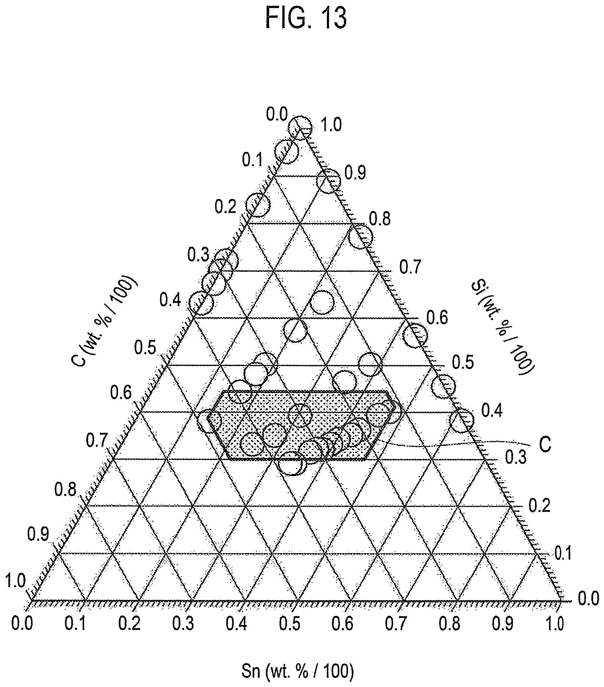

Then, from a viewpoint of ensuring better cycle characteristics, preferably, the above-described x is within a range of 29 to 44, the above-described y is within a range of 14 to 48, and the above-described z is within a range of 11 to 48. Note that this numeric value range corresponds to a range shown by reference symbol C of FIG. 13.

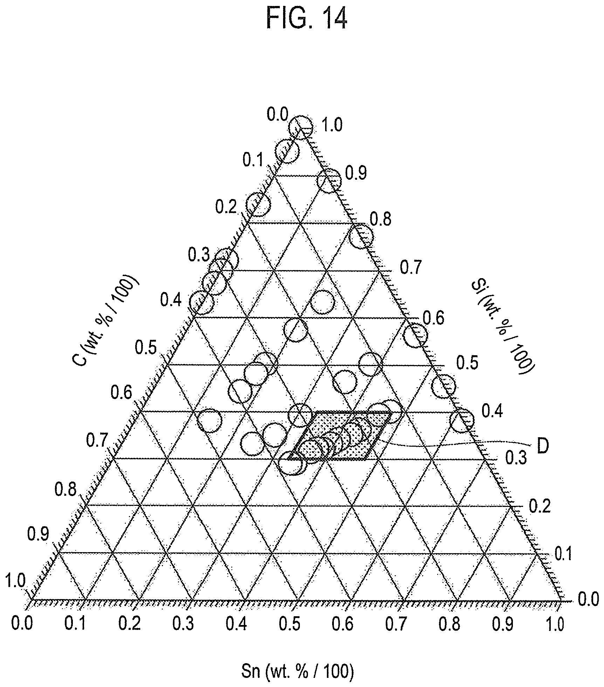

Furthermore, preferably, the above-described x is set within a range of 29 to 40, and the above-described y is set within a range of 34 to 48 (hence, $12 < z < 37$). Note that this numeric value range corresponds to a range shown by reference symbol D of FIG. 14.

Note that the above-described a ranges as $0 \leq a < 0.5$, and preferably, ranges as $0 \leq a < 0.1$.

(Mean particle diameter of Si alloy)

A mean particle diameter of the above-described Si alloy just needs to be substantially the same as a mean particle diameter of the negative electrode active material contained in the existing negative electrode active material layer 15, and is not particularly limited. The mean particle diameter just needs to preferably range from 1 to 20 $\mu$m from the viewpoint of the output enhancement. However, the mean particle diameter is never limited to the range as described above, and may go out of this range as long as the functions and effects of this embodiment can be developed effectively. Note that a shape of the Si alloy is not particularly limited, and can be spherical, ellipsoidal, columnar, polygonal columnar, scale-like, and so on.

(Manufacturing method of alloy)

A manufacturing method of the alloy according to this embodiment, which has the compositional formula $Si_x$-$Sn_yM_zA_a$, is not particularly limited, and can be produced by using a variety of manufacturing methods heretofore known in public. That is to say, there is hardly a difference in alloy state/characteristics, which may be caused depending on the manufacturing method, and accordingly, every manufacturing method can be applied.

Specifically, for example, as a manufacturing method of a particle form of the alloy having the compositional formula $Si_xSn_yM_zA_a$, for example, a mechanical alloy method, an arc plasma fusion method and the like can be used.

In the method of manufacturing the Si alloy into the above-described form of the particles, a binder, an electrically-conductive auxiliary agent and a viscosity control solvent are added to the particles, and slurry is adjusted, whereby a slurry electrode can be formed by using the slurry concerned. Therefore, it is easy to realize mass production of the Si alloy, and the Si alloy is excellent in that it is easy to put into practical use as an actual electrode for the battery.

The description has been made above of the predetermined Si alloy essentially contained in the negative electrode active material layer; however, the negative electrode active material layer may contain other negative electrode active materials. As the other negative electrode active materials of the above-described predetermined alloy, there are mentioned: a carbon-based material including carbon such as natural graphite, artificial graphite, carbon black, activated carbon, carbon fiber, coke, soft carbon and hard carbon; pure metal such as Si and Sn; an alloy-based active material that goes out of the above-described predetermined composition ratio; or a metal oxide such as TiO, $Ti_2O_3$ and $TiO_2$ and $SiO_2$, SiO and $SnO_2$; a lithium-transition metal composite oxide such as $Li_{4/3}Ti_{5/3}O_4$ and $Li_7MnN$; a Li-Pb-based alloy; a Li-Al-based alloy; Li; and the like. However, from a viewpoint of sufficiently exerting the functions and the effects, which are expressed by using the above-described predetermined Si alloy as the negative electrode active material, a content of the above-described predetermined Si alloy, which occupies a total 100 mass% of the negative electrode active material, is preferably 50 to 100 mass%, more preferably 80 to 100 mass%, still more preferably 90 to 100 mass%, particularly preferably 95 to 100 mass%, most preferably 100 mass%.

A carbon-based material, which is suitable in a combination with the above-described Si alloy, is described as an aspect of this embodiment.

(Carbon-based material)

In an aspect of this embodiment, as the negative electrode active material, a carbon-based material is further contained in addition to the above-described ternary Si-Sn-M-based Si alloy.

The carbon-based material for use in this embodiment is not particularly limited; however, there are mentioned carbon materials such as: graphite that is high crystalline carbon such as natural graphite and artificial graphite; low crystalline carbon such as soft carbon and hard carbon; carbon black such as Ketjen Black, acetylene black, channel black, lamp black, oil furnace black and thermal black; fullerene; carbon nanotube; carbon nanofiber; carbon nano-horn; and carbon fibril. Among them, graphite is preferably used.

In this embodiment, the negative electrode active material layer is formed in such a manner that the negative electrode active material is mixed with the carbon-based material together with the above-described Si alloy, and can thereby exhibit good-balance characteristics with a high initial capacity while maintaining higher cycle characteristics.

The above-described Si alloy is mixed with the carbon-based material, whereby it becomes possible to arrange the Si alloy in the negative electrode active material layer more uniformly. As a result, all pieces of the Si alloy in the negative electrode active material layer exhibit equivalent reactivity, and further enhancement of the cycle characteristics can be achieved.

Note that, as a result of mixture of the carbon-based material, the content of the Si alloy in the negative electrode active material layer is lowered, whereby the initial capacity may be lowered. However, the carbon-based material itself has reactivity with Li ions, and accordingly, a degree of the lowering of the initial capacity becomes relatively small. That is to say, in a case of using the Si alloy and the carbon-based material in combination, such an enhancement effect of the cycle characteristics is large in comparison with a lowering function of the initial capacity.

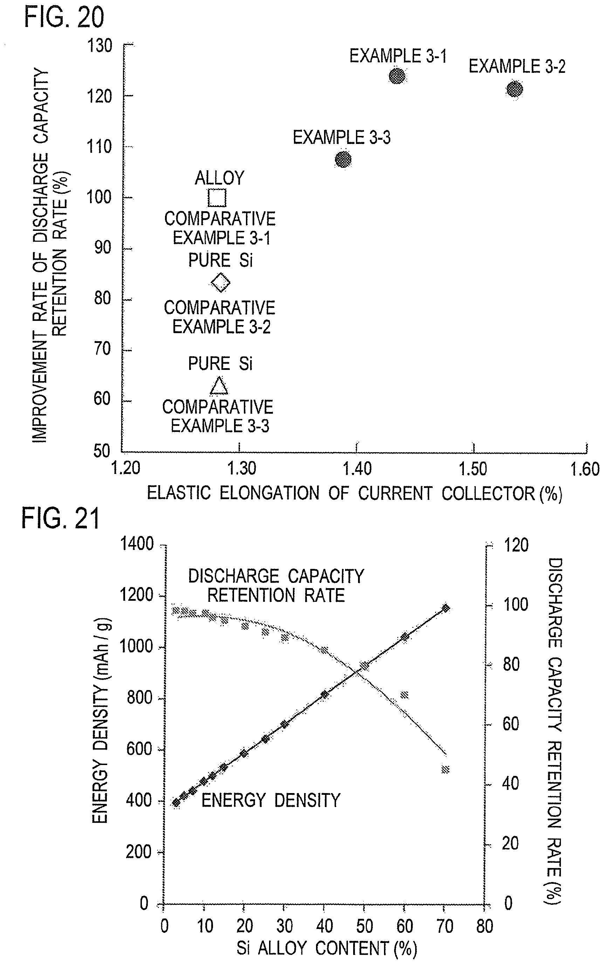

Moreover, in comparison with the Si alloy, the carbon-based material is less likely to cause the volume change in the event of reacting with the Li ions. Therefore, in the case of using the above-described Si alloy and the carbon-based material in combination, even in a case where the volume change of the Si alloy is large, an influence of the volume change of the negative electrode active material, which follows the Li reaction, can be made relatively slight when the whole of the negative electrode active material is viewed. Note that such an effect in the case of using the Si alloy and the carbon-based material in combination can also be understood from a result of an example where the cycle characteristics are increased as the content of the carbon-based material is larger (as the content of the Si alloy is smaller) (refer to Table 7 and FIG. 21).

Moreover, an electric power consumption (Wh) can be reduced by using the above-described Si alloy and the carbon-based material in combination. More specifically, a potential of the carbon-based material is relatively low in comparison with that of the Si alloy. As a result, in the case of using the above-described Si alloy and the carbon-based material in combination, such a relatively high potential which the Si alloy has can be reduced. Then, a potential of the whole of the negative electrode is lowered, and accordingly, the electric power consumption (Wh) can be reduced. Such functions and effects in the case of using the above-described Si alloy and the carbon-based material in combination are particularly advantageous in an event of using an electrical device, which is for use in a vehicle, among the electrical devices.

A shape of the carbon-based material is not particularly limited, and can be spherical, ellipsoidal, columnar, polygonal columnar, scale-like, and so on.

(Mean particle diameter of carbon-based material)

Moreover, a mean particle diameter of the carbon-based material is not particularly limited; however, is preferably 5 to 25 $\mu$m, more preferably 5 to 10 $\mu$m. In this event, with regard to comparison with the mean particle diameter of the above-mentioned Si alloy, the mean particle diameter of the carbon-based material may be the same as or different from the mean particle diameter of the Si alloy, however, preferably, is different therefrom. In particular, preferably, the mean particle diameter of the above-described alloy is smaller than the mean particle diameter of the above-described carbon-based material. If the mean particle diameter of the carbon-based material is relatively larger than the mean particle diameter of the alloy, then a configuration is provided, in which the particles of the carbon-based material are arranged uniformly, and the Si alloy is arranged between the particles of the carbon-based material. Accordingly, the Si alloy can be arranged uniformly in the negative electrode active material layer.

In the case of using the Si alloy and the carbon-based material in combination, a particle diameter ratio of the mean particle diameter of the carbon-based material and the mean particle diameter of the Si alloy (mean particle diameter of Si alloy / mean particle diameter of carbon-based material) is preferably 1/250 to less than 1, more preferably 1/100 to 1/4.

A mixture ratio of the Si alloy and the carbon-based material in the case of using the Si alloy and the carbon-based material in the negative electrode active material in combination is not particularly limited, and can be appropriately selected in response to a desired purpose and the like. In particular, preferably, the content of the Si alloy in the above-described negative electrode active material in the case of using the Si alloy and the carbon-based material in combination is 3 to 70 mass%. In an embodiment, more preferably, the content of the Si alloy in the above-described negative electrode active material in the case of using the Si alloy and the carbon-based material in combination is 30 to 50 mass%. Moreover, in another embodiment, more preferably, the content of the Si alloy in the above-described negative electrode active material in the case of using the Si alloy and the carbon-based material in combination is 50 to 70 mass%.

If the content of the above-described Si alloy in the above-described negative electrode active material in the case of using the Si alloy and the carbon-based material in combination is 3 mass% or more, then this is preferable since a high initial capacity can be obtained. Meanwhile, if the content of the above-described Si alloy is 70 mass% or less, then this is preferable since high cycle characteristics can be obtained.

(Manufacturing method of negative electrode active material)

The negative electrode active material is not particularly limited, and can be manufactured by a method known in public. In usual, the manufacturing method of the above-described Si alloy can be used for the negative electrode active material layer. Specifically, the Si alloy in the particle form is manufactured by using a mechanical alloy method, an arc plasma fusion method and the like, and thereafter, the carbon-based material (in the case of using the Si alloy and the carbon-based material in combination), the binder, the electrically-conductive auxiliary agent, and the viscosity control agent are added thereto to thereby prepare slurry, whereby a slurry electrode can be formed by using the slurry. In this event, in the case of using the Si alloy and the carbon-based material in combination, the amount of the Si alloy in the particle form and the amount of the carbon-based material are changed as appropriate, whereby such a negative electrode active material, in which the content of the Si alloy becomes a desired value, can be manufactured.

(Elongation of negative electrode active material layer)

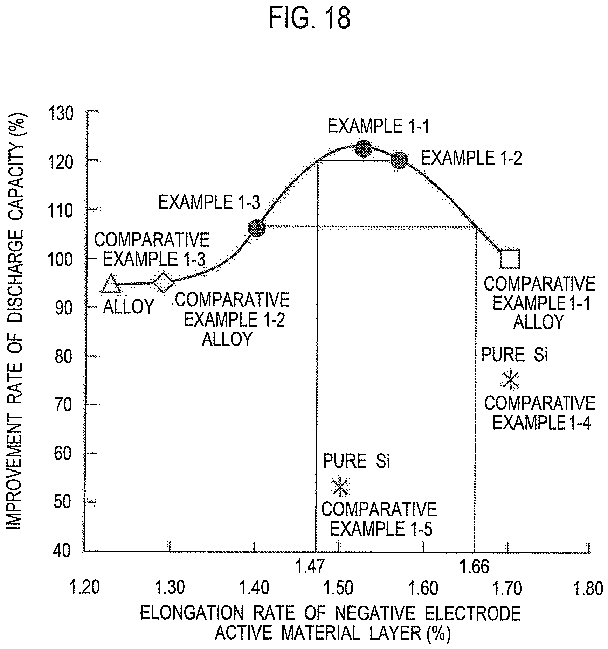

This embodiment is characterized in that the above-described ternary Si-Sn-M-based alloy is contained as the negative electrode active material, and the elongation ($\delta$) of the negative electrode active material layer is in the range of $1.29 < \delta < 1.70\%$. After the above-described ternary Si-Sn-M-based alloy is applied, the elongation ($\delta$) of the negative electrode active material layer is allowed to exceed 1.29%, whereby constituent elements of the electrode (negative electrode active material layer) other than the active material can follow the volume change caused by the expansion/contraction of the negative electrode active material, which is caused by the charge/discharge. As a result, the volume change of the whole of the electrode (negative electrode active material layer) can be suppressed, and the improvement rate of the discharge capacity can be enhanced to a large extent. Moreover, after the above-described ternary Si-Sn-M-based alloy is applied, the elongation ($\delta$) of the negative electrode active material layer is set at less than 1.70%, whereby the elongation of the negative electrode active material layer can be suppressed from inhibiting the reaction (insertion/elimination) of the lithium ions to the negative electrode active material, the reaction following the charge/discharge. As a result, a good negative electrode for a lithium ion secondary battery, which has high capacity/high cycle durability, is obtained. Moreover, by using the negative electrode for a lithium ion secondary battery, which is composed by using the negative electrode active material layer of this embodiment, a lithium ion secondary battery, which has high capacity/high cycle durability, and particularly, is excellent in improvement rate of discharge capacity, is obtained. That is to say, in cases where, after the above-described ternary Si-Sn-M-based alloy is applied, the elongation ($\delta$) of the negative electrode active material layer is 1.29 or less and 1.70% or more, then as shown in FIG. 18, the improvement rate of the discharge capacity becomes in sufficient. Moreover, in a case where pure Si with a high capacity (3200 mAh/g) is applied in place of the ternary Si-Sn-M-based alloy, even if the elongation ($\delta$) of the negative electrode active material layer is adjusted within the above-described range, the improvement rate of the discharge capacity is significantly lowered due to a large volume change (approximately four times) intrinsic to the pure Si (refer to Comparative examples 1-4 and 1-5 of FIG. 18).

After the above-described ternary Si-Sn-M-based alloy is applied, the elongation ($\delta$) of the negative electrode active material layer is preferably $1.40 \leq \delta < 1.70\%$, more preferably $1.40 \leq \delta < 1.66\%$, still more preferably $1.40 \leq \delta < 1.57\%$, particularly preferably $1.47 \leq \delta < 1.57\%$, more particularly preferably $1.53 \leq \delta < 1.57\%$. As the elongation ($\delta$) of the negative electrode active material layer is adjusted in the more suitable ranges described above more and more, a higher improvement rate of the discharge capacity can be achieved, and in this point, the negative electrode active material layer of this embodiment is excellent (refer to FIG. 18).

The elongation ($\delta$) of the negative electrode active material layer is measured by a value measured in accordance with the tensile test method of JIS K 7163 (1994).

Means for adjusting the elongation ($\delta$) of the negative electrode active material layer within the above-described range is not particularly limited; however, just needs to be capable of appropriately adjusting types and contents of the electrically-conductive auxiliary agent, the binder and the like, and this can contribute to the elongation ($\delta$) of the negative electrode active material layer, among the components in the negative electrode active material layer. In particular, the compounding ratio of each of the components in the negative electrode active material layer has a range that is defined to be substantially optimum, and if the compounding ratio (contents) of the electrically-conductive auxiliary agent, the binder or the like is changed (varied) by daring to change this optimum range, then this may cause an apprehension that battery performance may be damaged. Therefore, desirably, in a state where the optimum range of the compounding ratio of each component in the negative electrode active material layer is held without being changed, the elongation

($\delta$) of the negative electrode active material layer is adjusted by changing the types (combination of the electrically-conductive auxiliary agent and the binder) of the electrically-conductive auxiliary agent, the binder and the like. Note that, with regard to the binder or the like, binding force or the like thereof is changed by changing the type thereof, and accordingly, more preferably, an optimum binder is used, and thereafter, a material (type) of the electrically-conductive auxiliary agent, which is capable of adjusting the elongation ($\delta$) of the negative electrode active material layer without affecting conductive performance, is desirably adjusted as appropriate. According to the invention, as such a carbon material for use as the electrically-conductive auxiliary agent, desirably, such a short chain-like or fibrous one, which has a predetermined bulk density (volume) or a predetermined length, is used. By using such a short chain-like or fibrous electrically-conductive auxiliary agent, in an event where the ternary Si-Sn-M-based alloy active material causes a volume change (expansion/contraction) within a predetermined range by the charge/discharge, the short chain-like or fibrous electrically-conductive auxiliary agent can follow such a predetermined-range volume change of the alloy active material and ensure the conductivity. Specifically, in the state where the alloy active material contracts in volume, the short chain-like or fibrous electrically-conductive auxiliary agent, which is described above, is in contact with a plurality of the alloy active material particles in an entangled state, and in comparison with a state of being linearly extended, the electrically-conductive auxiliary agent forms a three-dimensional electronic (conductive) network in a state where there is a sufficient margin for the elongation. Meanwhile, in a state where the alloy active material expands in volume within the predetermined range, the short chain-like or fibrous electrically-conductive auxiliary agent, which is described above, can maintain a state of being elongated linearly to some extent while holding the state of being entangled into the plurality of alloy active material particles which have expanded in volume (can follow the volume change). Therefore, it can be said that the three-dimensional electronic (conductive) network can be sufficiently held even in a case where the alloy active material has expanded in volume. It can be said that this is the function and effect (mechanism), which are realizable in the case of using the above-described high-capacity ternary Si-Sn-M-based alloy active material having the volume change within the predetermined range. On the contrary, in an electrically-conductive auxiliary agent with a balloon shape (Ketjen Black, fullerene or the like) or a scale shape (graphite or the like), which does not have the predetermined bulk density (volume) or the predetermined length, elongation ($\delta$) of the negative electrode active material layer becomes smaller than the above-described range (refer to Comparative examples 1-2 and 1-3). In such a case, in an event where the ternary Si-Sn-M-based alloy active material causes the predetermined-range volume change (expansion/contraction) by the charge/discharge, it becomes difficult for the balloon-like or scale-like electrically-conductive auxiliary agent to follow the predetermined-range volume change of the alloy active material, and it becomes difficult to ensure the conductivity. More specifically, in a state where the alloy active material has contracted, the balloon-like or scale-like electrically-conductive auxiliary agent, which is described above, is in contact with the plurality of alloy active material particles so as to cover surfaces thereof. However, in such a state where the alloy active material has expanded in volume, a surface area of the alloy active material particles is increased, gaps are generated between electrically-conductive auxiliary agent particles on surfaces of the alloy active material particles, and the electrically-conductive auxiliary agent particles are carried on the surfaces of the alloy active material particles, which have expanded in volume, in a dispersed state. As a result, it can be said that a three-dimensional electronic (conductive) network by the balloon-like or scale-like electrically-conductive auxiliary agent cannot be held, resulting in remarkable lowering of the improvement rate of the discharge capacity (refer to Comparative examples 1-2 and 1-3 of FIG. 18). Meanwhile, in the long chain-like electrically-conductive auxiliary agent (long chain-like acetylene black and the like), which does not have the predetermined bulk density or the predetermined length, the elongation ($\delta$) of the negative electrode active material layer becomes larger than the above-described range (refer to Comparative example 1). In such a case, in the state where the alloy active material has contracted, the above-described long chain-like electrically-conductive auxiliary agent is in a state of being entangled into the plurality of alloy active material particles. Therefore, the alloy active material particles are inhibited from expanding in volume by the electrically-conductive auxiliary agent (further, the binding force of the binder, and the like) entangled into the alloy active material particles at the time of the charge. As a result, it can be said that the reaction (insertion/elimination) of the lithium ions to the negative electrode active material, the reaction following the charge/discharge, is inhibited, resulting in the remarkable lowering improvement rate of the discharge capacity (refer to Comparative example 1-1 of FIG. 18). Moreover, a part of the long chain-like electrically-conductive auxiliary agent cannot follow the volume expansion of the alloy active material particles, and cannot hold the state where the above-described electrically-conductive auxiliary agent is entangled into the plurality of alloy active material particles which have expanded in volume. Therefore, it can be said that such a three-dimensional electronic (conductive) network, which is formed between the alloy active material particles in contact with a part of the long chain-like electrically-conductive auxiliary agent, is broken at a variety of places, resulting in the remarkable lowering of improvement rate of the discharge capacity (refer to Comparative example 1-1 of FIG. 18). Moreover, in the pure Si, which is accompanied with an extremely large volume change (four times), opposite to high capacity, the above-described short chain-like or fibrous electrically-conductive auxiliary agent is in a state of being entangled into a plurality of pure Si active material particles, which have expanded in volume, in the negative electrode active material layer. Therefore, the pure Si is inhibited from expanding in volume by the electrically-conductive auxiliary agent (further, the binding force of the binder, and the like) entangled into the pure Si active material particles at the time of the charge. As a result, it can be said that the reaction (insertion/elimination) of the lithium ions to the negative electrode active material, the reaction following the charge/discharge, is inhibited, resulting in the remarkable lowering of the improvement rate of the discharge capacity (refer to Comparative examples 1-4 and 1-5 of FIG. 18). Moreover, a part of the short chain-like or fibrous electrically-conductive auxiliary agent cannot follow the volume expansion of the pure Si active material particles, and cannot hold the state where the above-described electrically-conductive auxiliary agent is entangled into the plurality of pure Si active material particles which have expanded in volume. Therefore, it can be said that such a three-dimensional electronic (conductive) network, which is formed between the pure Si active material particles in contact with a part of the short chain-like or fibrous electrically-conductive auxiliary agent, is broken at a variety of places, resulting in the remarkable lowering of improvement rate of the discharge capacity (refer to Comparative example 1-4 and 1-5 of FIG. 18).

In terms of the action mechanism that the above-described electrically-conductive auxiliary agent can follow the volume change of the alloy active material and ensure the conductivity, it can be said that, also as the binder, it is desirable to use one that can follow the predetermined-range volume change of the alloy active material and ensure the conductivity. That is to say, as a suitable binder, one can be said to be desirable, which has an elastic modulus (elasticity) that enables the binder to follow the predetermined-range volume change of the alloy active material and to hold binding force thereof. From the viewpoints described above, a description is made of the electrically-conductive auxiliary agent and the binder, which are usable in this embodiment.

(Electrically-Conductive auxiliary agent for negative electrode)

The negative electrode active material layer containing the above-described ternary Si-Sn-M-based alloy active material contains an electrically-conductive auxiliary agent. Here, the electrically-conductive auxiliary agent refers to an additive to be compounded in order to enhance the conductivity of the negative electrode active material layer. In a case of using the existing carbon (carbon material), which is capable of inserting/eliminating Li, as the negative electrode active material, the electrically-conductive auxiliary agent is not particularly required, and meanwhile, in a case where the negative electrode active material does not have sufficient conductivity like the ternary Si-Sn-M-based alloy active material, the electrically-conductive auxiliary agent is required. As such an electrically-conductive auxiliary agent, there are mentioned: carbon powder such as carbon black including short chain-like carbon black (short chain-like acetylene black and the like), long chain-like carbon black (long chain-like acetylene black), Ketjen Black (furnace black), channel black and thermal black, and such as graphite including natural graphite and artificial graphite; carbon fiber such as vapor deposited carbon fiber or liquid deposited carbon fiber (carbon nanotube (CNT), graphite fiber and the like) and carbon nanofiber; and carbon materials such as Vulcan, Black Pearl, carbon nano-horn, carbon nano-balloon, hard carbon, fullerene, and expanded graphite; however, it is needless to say that the electrically-conductive auxiliary agent is not limited to these. Note that the above-described carbon fiber is CNT or carbon fiber (which is graphite-like and hard carbon-like (changed depending on the burning temperature at the time of synthesis thereof)), and is capable of being synthesized by either a liquid phase method or a vapor phase method.

The negative electrode active material layer containing the above-described ternary Si-Sn-M-based alloy active material contains the electrically-conductive auxiliary agent, whereby a three-dimensional electronic (conductive) network in an inside of the negative electrode active material layer is formed effectively, and this can contribute to the enhancement of the output characteristics of the battery.

In particular, in a case of using the electrically-conductive auxiliary agent for adjusting the elongation ($\delta$) of the negative electrode active material layer within the above-described range, it is particularly desirable to use a slim or fibrous electrically-conductive auxiliary agent that can follow the predetermined-range volume change of the ternary Si-Sn-M-based alloy active material and ensure the conductivity. From such a viewpoint, the above-described short chain-like or fibrous electrically-conductive auxiliary agent is desirable as the electrically-conductive auxiliary agent usable for adjusting the elongation ($\delta$) of the negative electrode active material layer within the above-described range. For example, there are mentioned short chain-like carbon black (short chain-like acetylene black and the like); carbon fiber such as vapor deposited carbon fiber or liquid deposited carbon fiber (carbon nanotube (CNT), graphite fiber and the like) and carbon nanofiber; and the like; however, the electrically-conductive auxiliary agent is never limited to these. Note that the above-described carbon fiber is also CNT or carbon fiber (which is graphite-like and hard carbon-like (changed depending on the burning temperature at the time of synthesis thereof)), and is capable of being synthesized by either the liquid phase method or the vapor phase method. By using such an electrically-conductive auxiliary agent, the elongation ($\delta$) of the negative electrode active material layer can be adjusted within the above-described range, and the electrically-conductive auxiliary agent can follow the predetermined-range volume change of the ternary Si-Sn-M-based alloy active material and ensure the conductivity. Note that, in this embodiment, in order to adjust the elongation ($\delta$) of the negative electrode active material layer within the above-described range, a binder may be combined as well as the above-described electrically-conductive auxiliary agent. In such a case, even those other than the electrically-conductive auxiliary agents exemplified above are usable as long as being capable of adjusting the elongation ($\delta$) of the negative

electrode active material layer within the above-described range. With regard to such a combination of the electrically-conductive auxiliary agent and the binder, for example, it can be said to be desirable to combine the above-described short chain-like or fibrous electrically-conductive auxiliary agent and a binder to be described below, which has a predetermined elastic modulus (more than 1 GPa to less than 7.4 GPa), with each other.

In the case of using the ternary Si-Sn-M-based alloy active material, desirably, a content of the electrically-conductive auxiliary agent mixed into the negative electrode active material layer is made substantially equal to the content of the electrically-conductive auxiliary agent mixed into the positive electrode active material layer. That is to say, desirably, the content of the electrically-conductive auxiliary agent mixed into the negative electrode active material layer is also set in the range of preferably 1 to 10 mass%, more preferably 2 to 8 mass%, particularly preferably 3 to 7 mass% with respect to a total amount of electrode component materials on the negative electrode side. This is because the above-described ternary Si-Sn-M-based alloy active material is used for the negative electrode active material, and electronic conductivity of the negative electrode active material is low in a similar way to the positive electrode active material, and accordingly, electrode resistance can be reduced by compounding the electrically-conductive auxiliary agent thereinto. Note that, in a case where the negative electrode active material itself uses the carbon-based material such as graphite, soft carbon and hard carbon, which has excellent electronic conductivity, the content of the electrically-conductive auxiliary agent in the negative electrode active material layer just needs to be within the above-described range; however, those which can achieve an object of adding the electrically-conductive auxiliary agent even if a content of each thereof goes out of the above-described range is defined to be incorporated in the scope of this embodiment.

Moreover, a conductive binding agent, which has the functions of the above-described electrically-conductive auxiliary agent and binder in combination, may be used in place of these electrically-conductive auxiliary agent and binder, or may be used in combination with one or both of these electrically-conductive auxiliary agent and binder. As the conductive binder, for example, already commercially available TAB-2 (made by Hohsen Corporation) can be used.

(Binder for negative electrode)

The negative electrode active material layer 15 contains a binder. The binder for the negative electrode is added for the purpose of maintaining an electrode structure by binding the active materials to each other or the active material and the current collector to each other. the binder such as polyamide, which has relative strong binding force, can suitably hold the Si alloy on the carbon-based material. Furthermore, as the binder for use in the negative electrode active material layer, according to the invention, has an elastic modulus (elasticity) that enables the binder itself to follow the predetermined-range volume change of the ternary Si-Sn-M-based alloy active material as described above, and to ensure binding force thereof. Li enters Si at the time of the charge, whereby the alloy active material expands. In that case, a binder, which is present while being sandwiched between the expanded active material particles, is compressed, and it is necessary for the binder to have an elastic modulus that can resist compression force thereof. On the contrary, a binder, which is present at positions of binding the expanded active material particles to one another, is elongated, and also in this case, it is necessary to hold the elasticity. In a case where the binder is elongated too much to function as an elastic body, then the binder, which is elongated at the time of the contraction, does not return to an original state thereof, and does not function as the binder. Hence, if the elastic modulus of the binder is more than 1 GPa as a lower side regulated below, then the binder can develop a high improvement rate of the discharge capacity without being damaged by being compressed upon receiving the expansion of the alloy active material or without damaging the elasticity thereof. Moreover, if the E elastic modulus of the binder is less than 7.4 GPa as an upper side regulated below, then the binder is not too hard, and Li can be easily inserted into Si at the time of the charge. That is to say, unless the elastic modulus of the binder is too high, the negative electrode active material can be changed in volume (expand/contract) to the optimum range without inhibiting the insertion/elimination of Li thereinto/therefrom, the insertion/elimination following the charge/discharge. As a result, the reaction of the Li ions with the negative electrode active material (Si) can be suppressed from being inhibited, and the high improvement rate of the discharge capacity can be developed. According to the invention, the binder is selected from polyamide, polyimide and polyamide imide, which have the above-described elastic modulus. These binders may be each used singly, or two or more thereof may be used in combination. In particular, the E elastic modulus (elasticity) of the binder, which can follow the predetermined-range volume change of the ternary Si-Sn-M-based alloy active material as described above, is described in preferred aspects to be described below.

According to the invention, the above-described binder for a negative electrode contains resin with an E elastic modulus from more than 1.00 GPa to less than 7.40 GPa. This is because it is apprehended that, in both cases where the E elastic modulus of the binder is 1.00 GPa or less and 7.40 GPa or more, the binder cannot follow the volume change of the Si alloy, and the sufficient discharge capacity cannot be achieved. That is to say, though the binder has a function to adhere the Si alloy, the binder cannot endure a pressure, which is applied thereto at the time when the Si alloy expands, since the binder is soft if the E elastic modulus of the binder is 1.00 GPa or less, and then sufficient Li ions cannot be introduced into the Si alloy. Meanwhile, the expansion of the Si alloy at the time when the Li ions are inserted/eliminated is suppressed since the binder is hard if the E elastic modulus of the binder is 7.40 GPa or more. Here, preferably, the resin having the E elastic modulus within the above-described predetermined range is one or two or more selected from the group consisting of polyimide, polyamide imide and polyamide, and particular preferably, the resin is polyimide. Note that, as the value of the E elastic modulus, a value measured in accordance with the tensile test method of JIS K 7163 (1994) is employed. Moreover, in a case where a plurality of the binders is used, at least one resin having the above-described predetermined E elastic modulus just needs to be contained.

Here, the value of the E elastic modulus of the binder depends on a material of the binder, a concentration (solid-liquid ratio) of slurry, a degree of crosslink, and a thermal history such as a drying temperature, a drying speed and a drying time. In this embodiment, these are adjusted, whereby the E elastic modulus of the binder can be adjusted within the above-mentioned desired range.

Here, from a viewpoint of sufficiently exerting the functions and the effects, which are expressed by using, as the binder, the resin having the above-described predetermined E elastic modulus, a content of the resin having the above-described predetermined E elastic modulus, which occupies a total 100 mass% of the binder, is preferably 50 to 100 mass%, more preferably 80 to 100 mass%, still more preferably 90 to 100 mass%, particularly preferably 95 to 100 mass%, most preferably 100 mass%.

Note that an amount of the binder contained in the negative electrode active material layer is not particularly limited as long as the amount allows the binding of the negative electrode active material containing the ternary Si-Sn-M-based alloy with a large volume change; however, is preferably 0.5 to 15 mass%, more preferably 1 to 10 mass% with respect to the active material layer.

(Requirements common to positive electrode and negative electrode active material layers 13 and 15)

A description is made below of requirements common to the positive electrode and negative electrode active material layers 13 and 15.

As other additives which can be contained in the positive electrode active material layer 13 and the negative electrode active material layer 15, for example, there are mentioned electrolyte salt (lithium salt), an ion conductive polymer, and the like.

(Electrolyte salt)

As the electrolyte salt (lithium salt), there are mentioned $Li(C_2F_5SO_2)_2N$, $LiPF_6$, $LiBF_4$, $LiClO_4$, $LiAsF_6$, $LiCF_3SO_3$ and the like.

(Ion conductive polymer)

As the ion conductive polymer, for example, there are mentioned a polyethylene oxide (PEO)-based polymer and a polypropylene oxide (PPO)-based polymer.

(Compounding ratio of each component contained in each active material layer)

The compounding ratio of each component contained in each of the positive electrode active material layer and the negative electrode active material layer is not particularly limited. The compounding ratio can be adjusted by appropriately referring to the knowledge known in public about a non-aqueous solvent-based secondary battery.

(Thickness of each of active material layers)

A thickness of each of the active material layers (active material layer on one of the surfaces of the current collector) is not particularly limited, either, and knowledge heretofore known in public about the battery can be referred to as appropriate. An example of the thickness is mentioned. In usual, the thickness of each active material layer approximately ranges from 1 to 500 $\mu$m, preferably 2 to 100 $\mu$m in consideration of the usage purpose of the battery (output is regarded important, energy is regarded important, and so on), and of ion conductivity.

[Current collector]

(Positive electrode current collector)

The positive electrode current collector 11 is composed of a conductive material. A size of the current collector is determined in response to a usage purpose of the battery. For example, if the current collector is used for a large battery for which a high energy density is required, then a current collector with a large area is used. A thickness of the current collector is not particularly limited, either. In usual, the thickness of the current collector approximately ranges from 1 to 100 $\mu$m. A shape of the current collector is not particularly limited, either. In the laminated battery 10 shown in FIG. 1, besides current collector foil, those with a mesh pattern (expand grid and the like) and the like can be used. Note that, in the case where a thin film alloy as an example of the negative electrode active material is directly formed on the negative electrode current collector 12 by the sputtering method and the like, it is desirable to use the current collector foil.

A material that composes the current collector is not particularly limited. For example, metal can be employed, and resin can be employed, in which conductive filler is added to a conductive polymer material or a non-conductive polymer material. Specifically, as metal, there are mentioned aluminum, nickel, iron, stainless steel, titanium, copper and the like. Besides these, there can be preferably used a clad material of nickel and aluminum, a clad material of copper and aluminum, a plated material in which these metals are combined with one another, or the like. Moreover, the metal may be foil in which aluminum is coated on a surface of metal. Among them, aluminum, stainless steel, copper and nickel are preferable from viewpoints of the electron conductivity, a battery operation potential, adherence of the negative electrode active material onto the current collector by the sputtering, and the like.

Moreover, as the conductive polymer material, for example, there are mentioned polyaniline, polypyrrole, polythiophene, polyacetylene, polyparaphenylene, polyphenylene vinylene, polyacrylonitrile, polyoxadiazole and the like. Such conductive polymer materials have sufficient conductivity even if the conductive filler is not added thereto, and accordingly, are advantageous in a point of facilitation of the manufacturing process or of weight reduction of the current collector.

As the non-conductive polymer material, for example, there is mentioned polyethylene (PE: high-density polyethylene (HDPE), low-density polyethylene (LDPE) and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinylidene chloride (PVC), polyvinylidene fluoride (PVdF), polystyrene (PS), or the like. Such non-conductive polymer materials can have excellent potential resistance or solvent resistance.

According to needs, the conductive filler can be added to the conductive polymer material or the non-conductive polymer material, which is described above. In particular, in the case where resin that serves as a base material of the current collector is composed of only the non-conductive polymer, the conductive filler becomes necessarily essential in order to impart the conductivity to the resin. As long as being a material having the conductivity, the conductive filler can be used without receiving limitations in particular. For example, as a material excellent in conductivity, potential resistance or lithium ion barrier properties, there are mentioned metal, conductive carbon and the like. Such metal is not particularly limited; however, preferably, includes at least one metal selected from the group consisting of Ni, Ti, Al, Cu, Pt, Fe, Cr, Sn, Zn, In, Sb and K, or an alloy or a metal oxide, which contains the metal. Moreover, the conductive carbon is not particularly limited. Preferably, the conductive carbon includes at least one selected from the group consisting of acetylene black, Vulcan, Black Pearl, carbon nanofiber, Ketjen Black, carbon nanotube, carbon nano-horn, carbon nano-balloon and fullerene. A loading amount of the conductive filler is not particularly limited as long as being an amount by which sufficient conductivity can be imparted to the current collector, and in general, approximately ranges from 5 to 35 mass%.

(Negative electrode current collector)

The negative electrode current collector 12 is composed of a conductive material. A size of the current collector is determined in response to the usage purpose of the battery. For example, if the current collector is used for a large battery for which a high energy density is required, then a current collector with a large area is used.

A shape of the current collector is not particularly limited, either. In the laminated battery 10 shown in FIG. 1, besides current collector foil, those with a mesh pattern (expand grid and the like) and the like can be used; however, it is desirable to use the current collector foil.

A material that composes the current collector is not particularly limited. For example, metal can be employed, and resin can be employed, in which conductive filler is added to a conductive polymer material or a non-conductive polymer material.

Specifically, as metal, there are mentioned aluminum, nickel, iron, stainless steel, titanium and the like, and alloys of these. Besides these, a clad material of nickel and aluminum, a clad material of copper and aluminum, a plated material in which these metals are combined with one another or the like can be used. Moreover, the metal may be foil in which aluminum is coated on a surface of metal. As will be described later, preferably, copper is used from viewpoints of the electron conductivity, the battery operation potential, the adherence of the negative electrode active material onto the current collector by the sputtering, and the like.

Moreover, as the conductive polymer material, for example, there are mentioned polyaniline, polypyrrole, polythiophene, polyacetylene, polyparaphenylene, polyphenylene vinylene, polyacrylonitrile, polyoxadiazole and the like. Such conductive polymer materials have sufficient conductivity even if the conductive filler is not added thereto, and accordingly, are advantageous in a point of facilitation of the manufacturing process or of weight reduction of the current collector.

As the non-conductive polymer material, for example, there is mentioned polyethylene (PE: high-density polyethylene (HDPE), low-density polyethylene (LDPE) and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinylidene chloride (PVC), polyvinylidene fluoride (PVdF), polystyrene (PS), or the like. Such non-conductive polymer materials can have excellent potential resistance or solvent resistance.

According to needs, the conductive filler can be added to the conductive polymer material or the non-conductive polymer material, which is described above. In particular, in the case where resin that serves as a base material of the current collector is composed of only the non-conductive polymer, the conductive filler becomes necessarily essential in order to impart the conductivity to the resin.

As long as being a material having the conductivity, the conductive filler can be used without receiving limitations in particular. For example, as a material excellent in conductivity, potential resistance or lithium ion barrier properties, there are mentioned metal, conductive carbon and the like. Such metal is not particularly limited; however, preferably, includes at least one metal selected from the group consisting of Ni, Ti, Al, Cu, Pt, Fe, Cr, Sn, Zn, In, Sb and K, or an alloy or a metal oxide, which contains the metal. Moreover, the conductive carbon is not particularly limited. Preferably, the conductive carbon includes at least one selected from the group consisting of acetylene black, Vulcan, Black Pearl, carbon nanofiber, Ketjen Black, carbon nanotube, carbon nano-horn, carbon nano-balloon and fullerene.

A loading amount of the conductive filler is not particularly limited as long as being an amount by which sufficient conductivity can be imparted to the current collector, and in general, approximately ranges from 5 to 35 mass%.

The negative electrode of this embodiment is characterized in that elastic elongation of the current collector in a planar direction is 1.30% or more. Here, the elastic elongation (%) of the current collector is a ratio (%) of a magnitude of elastic elongation to a proportional limit in a tensile direction with respect to an original size of the current collector.

The negative electrode of this embodiment applies such a specific ternary Si alloy as the negative electrode active material, and can thereby obtain a function that a high initial discharge capacity similar to that of the Si negative electrode can be obtained, and simultaneously therewith, the amorphous-crystalline phase transition in the event of alloying Si and Li is suppressed to enhance the cycle lifetime.

However, in a case of fabricating a battery by using the negative electrode in which the negative electrode active material layer having the above-described specific ternary Si alloy together with the binder and the electrically-conductive auxiliary agent is coated on the negative electrode current collector, the expansion/contraction of thee negative electrode active material can occur following the charge/discharge of the battery. Following this, the negative electrode active material layer is changed in volume, and a stress is applied to the current collector in intimate contact with the negative electrode active material layer. At this time, if the current collector cannot follow the volume change of the negative electrode active material layer, then the current collector is plastically deformed, and a wrinkle occurs on the current collector. When the wrinkle occurs on the current collector, the negative electrode active material layer is warped, and an inter-electrode distance thereof with the positive electrode becomes nonuniform, and accordingly, the lowering of the Li reactivity and electrode concentration can occur. Moreover, the plastic deformation of the current collector may result in occurrence of crack and fracture of the current collector, and in direct breakage of the negative electrode active material layer. As a result, the lowering of the discharge capacity of the battery may occur.

The negative electrode of this embodiment solves the problems as described above. By using the negative electrode with elastic elongation of 1.30% or more, the current collector can elastically follow the volume change of the negative electrode active material layer, which is caused by the expansion/contraction of the negative electrode active material by the charge/discharge. Therefore, there can be suppressed the wrinkle generated in such a manner that a stress is applied to the current collector in intimate contact with the negative electrode active material layer, and accordingly, there can be prevented the wrinkle of the negative electrode active material layer and the fracture of the negative electrode active material layer or the current collector. As a result, the inter-electrode distance of the negative electrode with the positive electrode can be kept uniform. Moreover, a side reaction also becomes less likely to occur. Therefore, a high discharge capacity can be obtained. Furthermore, the plastic deformation of the current collector becomes less likely to occur even if the charge/discharge is repeated, and accordingly, the cycle durability can also be enhanced.

Moreover, if the current collector has elastic elongation of 1.30% or more, then even in a case where the elasticity of the negative electrode active material layer is lost by the expansion/contraction of the negative electrode active material, which follows the charge/discharge, the current collector is brought into intimate contact with the negative electrode active material layer and is elastically deformed, and accordingly, the lowering of the capacity and the cycle durability can be suppressed to the minimum.

Preferably, the elastic elongation of the current collector for use in the negative electrode of this embodiment is 1.40% or more. If the elastic elongation of the current collector is 1.40% or more, then it is easier for the current collector to follow the volume change of the negative electrode active material for use in this embodiment, the volume change following the charge/discharge, when a consideration is given to a degree thereof. Therefore, the improvement rate of the discharge capacity is high, and the cycle characteristics can be further improved. Moreover, if the elastic elongation of the current collector is 1.50% or more, then a higher effect can be obtained in the case of using the negative electrode active material of this embodiment.

As the elastic elongation of the current collector is larger, the current collector can follow the volume change of the negative electrode active material layer more elastically, and accordingly, an upper limit value of the elastic elongation is not particularly limited.

In the negative electrode active material for use in this embodiment, the volume change following the charge/discharge, is large in comparison with that of the carbon material such as graphite; however, by using the current collector as described above, the plastic deformation of the current collector can be suppressed, and the warp of the negative electrode active material layer, and the lowering of the discharge capacity, which results therefrom, can be suppressed. However, in the case of using the pure Si as the negative electrode active material, the volume change following the charge/discharge is larger, and accordingly, in some case, the current collector cannot follow the volume change of the negative electrode active material layer sufficiently by using the current collector as described above, and it is difficult to prevent the lowering of the discharge capacity. In the case of the active material of the ternary Si alloy for use in this embodiment, the elastic elongation of the current collector just needs to be 1.30% or more, and a battery excellent in discharge capacity and cycle characteristics is obtained (refer to FIG. 20).

Note that, in this specification, as the elastic elongation (%) of the current collector, a value measured in accordance with a tensile test method of JIS K 6251 (2010) is used. Moreover, the elastic elongation (%) of the current collector is a value measured at 25°C.

In the current collector in this embodiment, preferably, tensile strength thereof is 150 N/mm$^2$ or more. If the tensile strength is 150 N/mm$^2$ or more, then an effect of preventing the fracture of the current collector is high.

Note that, in this specification, as the tensile strength (N/mm$^2$) of the current collector, a value measured in accordance with the tensile test method of JIS K 6251 (2010) is used. Moreover, the tensile strength (N/mm$^2$) of the current collector is a value measured at 25°C.

As long as the elastic elongation of the current collector in this embodiment is 1.30% or more, the material that composes the current collector is not particularly limited as mentioned above, and preferably, metal such as copper, aluminum, nickel, iron, stainless steel, titanium and cobalt or an alloy of these metals can be used.

Among the metals described above, metal foil using copper, nickel, stainless steel or an alloy composed by adding other metal to each of these is preferable from viewpoints of mechanical strength, adherence onto the active material layer, chemical stability, electrochemical stability at a potential where the battery reaction progresses, conductivity, cost and the like. In particular, copper or a copper alloy is particularly preferable because of a standard oxidation reduction potential thereof.

As such copper foil, rolled copper foil (copper foil obtained by a rolling method) or electrolytic copper foil (copper foil obtained by an electrolytic method) can be used. Also as such copper alloy foil, both of electrolytic copper alloy foil or rolled copper alloy foil can be used. In the negative electrode of this embodiment, it is preferable to use the rolled copper foil or the rolled copper alloy foil since the rolled copper foil or the rolled copper alloy foil has large tensile strength and is excellent in flexibility.

As the alloy of the copper, an alloy can be preferably used, which is obtained by adding copper with an element, for example, such as Zr, Cr, Zn and Sn. In comparison with pure copper, such an alloy has a high elastic modulus, is easy to follow the volume change of the negative electrode active material layer, and is less likely to cause the plastic deformation. Therefore, the wrinkle and fracture of the current collector are less likely to occur. Moreover, in comparison with pure copper, in the alloy obtained by adding copper with the element such as Zr, Cr, Zn and Sn, heat resistance thereof can be enhanced. In particular, if the alloy is an alloy in which a softening point is higher than a heat treatment temperature (approximately 300°C) in an event of coating the slurry, which contains the negative electrode active material, on the current collector and drying the slurry in a manufacturing process of the negative electrode, then this is preferable since the elasticity can be maintained even after the heat treatment. Among them, alloys added with Cr, Zn and Sn are preferable since the elasticity can be maintained after the heat treatment can be maintained. These alloy elements may be contained singly, or two or more thereof may be contained. A total content of such an alloy element is, for example, 0.01 to 0.9 mass%, preferably 0.03 to 0. 9 mass%, more preferably 0.3 to 0.9 mass%. If the content of the alloy element is 0.03 mass% or more, then this is preferable since the elasticity after the heat treatment can be maintained.

A method of obtaining the current collector with elastic elongation of 1.30% or more is not particularly limited. In a case where the current collector of this embodiment is made of the metal foil, then mechanical characteristics thereof can be changed by heating, cooling, pressurization, and addition of an impurity element. Note that commercially available metal foil having the above-described elongation may be used.

A thickness of the current collector of the negative electrode is not particularly limited, either; however, in the negative electrode of this embodiment, is preferably 5 to 15 $\mu$m, more preferably 5 to 10 $\mu$m. If the thickness of the current collector of the negative electrode is 5 $\mu$m or more, then this is preferable since sufficient mechanical strength is obtained. Moreover, if the thickness of the current collector of the negative electrode is 15 $\mu$m or less, then this is preferable in a point of thinning the battery.

Note that, also as a current collector for a bipolar electrode, a similar one to the negative electrode current collector just needs to be used. In particular, it is preferable to use one having durability against the positive electrode potential and the negative electrode potential.

[Electrolyte layer]

As an electrolyte that composes the electrolyte layer 17, a liquid electrolyte and a polymer electrolyte are usable.

The liquid electrolyte has a form in which lithium salt as supporting salt is dissolved into an organic solvent as a plasticizer. As the organic solvent usable as the plasticizer, for example, there are exemplified carbonates such as ethylene carbonate (EC), propylene carbonates (PC), diethyl carbonate (DEC) and dimethyl carbonate (DMC). Moreover, a compound such as LiBETI is employable in a similar way, and the compound is addible to the active material layer of the electrode as the supporting salt (lithium salt).

Meanwhile, the polymer electrolyte is classified into gel electrolyte that contains an electrolytic solution and intrinsic polymer electrolyte that does not contain the electrolytic solution.

The gel electrolyte has a configuration formed by injecting the above-described liquid electrolyte (electrolytic solution) into a matrix polymer made of an ion-conductive polymer. As the ion-conductive polymer for use as the matrix polymer, for example, polyethylene oxide (PEO), polypropylene oxide (PPO), a copolymer of these, and the like are mentioned. Electrolyte salt such as lithium salt can be dissolved well into such a polyalkylene oxide polymer.

A ratio of the above-described liquid electrolyte (electrolytic solution) in the gel electrolyte should not be particularly limited; however, desirably, is set at approximately several mass% to 98 mass% from viewpoints of the ion conductivity and the like. This embodiment is particularly effective for a gel electrolyte, in which a ratio of the electrolytic solution is as large as 70 mass% or more.

Note that, in a case where the electrolyte layer is composed of the liquid electrolyte, the gel electrolyte or the intrinsic polymer electrolyte, a separator may be used as the electrolyte layer. As a specific form of the separator (including nonwoven fabric), for example, there are mentioned a microporous membrane, a porous flat plate, and further, nonwoven fabric, which are made of polyolefin such as polyethylene and polypropylene.

The intrinsic polymer electrolyte has a configuration formed by dissolving the supporting salt (lithium salt) into the above-described matrix polymer, and the intrinsic polymer electrolyte does not contain the organic solvent as the plasticizer. Hence, in a case where the electrolyte layer is composed of the intrinsic polymer electrolyte, there is no apprehension about liquid leakage from the battery, and reliability of the battery can be enhanced.

The matrix polymer of the gel electrolyte or the intrinsic polymer electrolyte can develop excellent mechanical strength by forming a crosslinked structure. In order to form the crosslinked structure, a polymerizable polymer (for example, PEO and PPO) for forming the polymer electrolyte just needs to be subjected to polymerization treatment such as thermal polymerization, ultraviolet polymerization, radiation polymerization and electron beam polymerization by using an appropriate polymerization initiator.

[Current collector plate and lead]

The current collector plates may be used for the purpose of taking out a current to the outside of the battery. Each of the current collector plates is electrically connected to the current collectors and the leads, and is taken out to the outside of the laminated sheets as the battery exterior member.

A material that composes the current collector plate is not particularly limited, and a publicly known highly conductive material heretofore used as the current collector plate for the lithium ion secondary battery can be used. As a constituent material of the current collector plate, for example, a metal material such as aluminum, copper, titanium, nickel, stainless steel (SUS) and alloys of these is preferable, and aluminum, copper and the like are more preferable from viewpoints of light weight, corrosion resistance and high conductivity. Note that, for the positive electrode current collector plate and the negative electrode current collector plate, the same material may be used, or different materials may be used.

A positive electrode terminal lead and a negative electrode terminal lead are also used according to needs. As a material of the positive electrode terminal lead and the negative electrode terminal lead, a terminal lead to be used in the publicly known lithium ion secondary battery can be used. Note that, preferably, portions taken out from such battery exterior members 29 are covered with heat-resistant insulating heat shrinkage tubes and the like so as not to affect the product (for example, an automotive component, and in particular, an electronic instrument or the like) by causing electric leakage as a result of contact with a peripheral instrument, a wire or the like.

[Battery exterior member]

As such a battery exterior member 29, a metal can case publicly known can be used, and moreover, a bag-like case using a laminated film containing aluminum, the case being capable of covering the power generation element, can be used. As the laminated film concerned, for example, a laminated film with a three-layer structure composed by laminating PP, aluminum and Nylon on one another in this order, and the like can be used; however, the laminated film is never limited to these. The laminated film is desirable from viewpoints that the laminated film is excellent in enhancement of the output and in cooling performance, and can be suitably used for a battery for a large instrument such as an EV and an HEV.

Note that the above-described lithium ion secondary battery can be manufactured by a manufacturing method heretofore known in public.

<Exterior appearance configuration of lithium ion secondary battery>

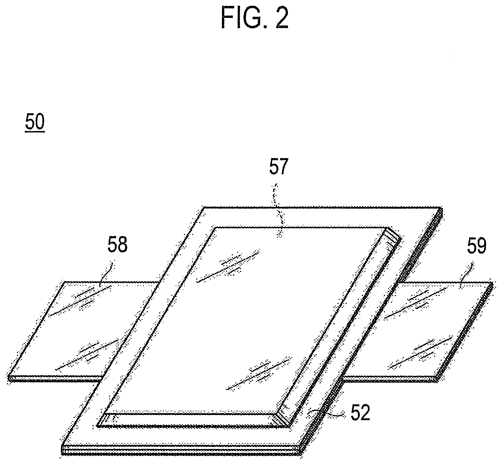

FIG. 2 is a perspective view showing an exterior appearance of the flat laminated-type lithium ion secondary battery.

As shown in FIG. 2, the flat laminated-type lithium ion secondary battery 50 has a rectangular flat shape, and from both side portions thereof, the positive electrode current collector plate 58 and the negative electrode current collector plate 59, which are for taking out electric power, are drawn out. The power generation element 57 is wrapped by the battery exterior member 52 of the lithium ion secondary battery 50, and a periphery thereof is thermally fused, and the power generation element 57 is hermetically sealed in a state where the positive electrode current collector plate 58 and the negative electrode current collector plate 59 are drawn to the outside. Here, the power generation element 57 corresponds to the power generation element 21 of the lithium ion secondary battery (laminated battery) 10 shown in FIG. 1. The power generation element 57 is one in which a plurality of the single cell layers (single cells) 19, each of which is composed of a positive electrode (positive electrode active material layer) 13, an electrolyte layer 17 and a negative electrode (negative electrode active material layer) 15, are laminated on one another.

Note that the above-described lithium ion secondary battery is not limited to such a laminated-type one (laminated cell) with a flat shape. The lithium ion secondary battery may be a wound-type lithium ion battery, which is one (coin cell) with a cylindrical shape, one (prism cell) with a prism shape, one formed by deforming such a battery with the cylindrical shape into a flat rectangular shape, and further, one with a cylinder cell. As described above, the shape of the lithium ion secondary battery is not particularly limited. In those with the above-described cylindrical shape and the prism shape, a laminated film may be used as a exterior member thereof, or a conventional cylindrical can (metal can) may be used as the exterior member, and as described above, no particular limitations are imposed thereon. Preferably, the power generation element is wrapped with an aluminum laminated film. Weight reduction of the lithium ion secondary battery can be achieved by this form.

Moreover, such drawing out of the positive electrode current collector plate 58 and the negative electrode current collector plate 59, which are shown in FIG. 2, is not particularly limited, either. The positive electrode current collector plate 58 and the negative electrode current collector plate 59 may be drawn out from the same side, and each of the positive electrode current collector plate 58 and the negative electrode current collector plate 59 may be divided into plural pieces, and may be drawn out from the respective sides. As described above, the drawing out of the current collector plates 58 and 59 is not limited to that shown in FIG. 2. Moreover, in the wound-type lithium ion battery, terminals may be formed, for example, by using cylindrical cans (metal cans) in place of the current collector plates.

As described above, the negative electrode using the negative electrode active material for a lithium ion secondary battery according to this embodiment and the lithium ion secondary battery can be suitably used as the large-capacity power supply of the electric vehicle, the hybrid electric vehicle, the fuel cell electric vehicle, the hybrid fuel cell electric vehicle and the like. That is to say, the negative electrode and the lithium ion secondary battery, which are described above, can be suitably used for the vehicle-driving power supply and the auxiliary power supply, for which a high volume energy density and a high volume output density are required.

Note that, in the above-described embodiment, the lithium ion battery is exemplified as the electrical device; however, the electrical device is not limited to this, and the present invention can also be applied to other types of secondary batteries, and further, to a primary battery. Moreover, the present invention can be applied not only to the batteries but also to capacitors.

EXAMPLES

A description is made of the present invention more in detail by using the following examples.

First, as a reference example, performance evaluation for the Si alloy, which is represented by Chemical formula (1), and composes the negative electrode for an electrical device according to the present invention, was performed.

(Reference example A): Performance evaluation for $Si_xSn_yAl_zA_a$

[1] Fabrication of negative electrode

As a sputtering apparatus, there was used a ternary DC magnetron sputtering apparatus (made by Yamato-Kiki Industrial Co., Ltd.; combinatorial sputter coating apparatus; gun-sample distance: approximately 100 mm) of an independent control system. Then, by using this sputtering apparatus, thin films of negative electrode active material alloys having the respective compositions were individually deposited on a substrate (current collector) made of nickel foil with a thickness of 20 $\mu$m under the following conditions, whereby totally 23 types of negative electrode samples were obtained (Reference examples 1 to 14 and Comparative reference examples 1 to 9).

(1) Targets (manufactured by Kojundo Chemical Laboratory Co., Ltd.; Purity: 4N)

Si: diameter of 50.8 mm; thickness of 3 mm (with backing plate made of oxygen-free copper with thickness of 2 mm)
Sn: diameter of 50.8 mm; thickness of 5 mm
Al: diameter of 50.8 mm; thickness of 3 mm

(2) Deposition condition

Base pressure: up to $7 \times 10^{-6}$ Pa
Type of sputtering gas: Ar (99.9999% or more)
Sputtering gas introduction amount: 10 sccm
Sputtering pressure: 30 mTorr
DC power supply: Si (185 W), Sn (0 to 40 W), Al (0 to 150 W)
Pre-sputtering time: 1 min.
Sputtering time: 10 min.
Substrate temperature: room temperature (25°C)

That is to say, the Si target, the Sn target and the Al target, which are as described above, were used, the sputtering time was fixed to 10 minutes, and power of the DC power supply was changed for each of the targets within the above-described ranges, whereby alloy thin films in an amorphous state were formed on Ni substrates, and negative electrode samples including such alloy thin films having a variety of compositions were obtained.
Here, several examples of fabricating the samples are illustrated. In Reference example 4, a DC power supply 1 (Si target) was set to 185 W, a DC power supply 2 (Sn target) was set to 25 W, and a DC power supply 3 (Al target) was set to 130 W. Moreover, in Comparative reference example 2, the DC power supply 1 (Si target) was set to 185 W, the DC power supply 2 (Sn target) was set to 30 W, and the DC power supply 3 (Al target) was set to 0 W. Furthermore, in Comparative reference example 5, the DC power supply 1 (Si target) was set to 185 W, the DC power supply 2 (Sn target) was set to 0 W, and the DC power supply 3 (Al target) was set to 78 W.
Component compositions of these alloy thin films are shown in Table 1 and FIGS. 3 to 6. Note that the obtained alloy thin films were analyzed by using the following analysis method and analysis device.

(3) Analysis method

Composition analysis: SEM/EDX analysis (made by JEOL Ltd.), EPMA analysis (made by JEOL Ltd.)
Film thickness measurement (for calculating sputtering rate): film thickness meter (made by Tokyo Instruments, Inc.)
Film state analysis: Raman spectroscopic analysis (made by Bruker Corporation)

[2] Fabrication of battery

Each of the negative electrode samples, which was obtained as described above, and a counter electrode made of lithium foil (made by Honjo Metal Co., Ltd.; diameter of 15 mm; thickness of 200 $\mu$m) were opposed to each other via a separator (made by Celgard, LLC; Celgard 2400), and thereafter, an electrolytic solution was injected thereinto whereby a CR2032-type coin cell was individually fabricated.

Note that, as the electrolytic solution, a solution was used, which was obtained by dissolving $LiPF_6$ (lithium hexafluorophosphate) into a mixed non-aqueous solvent so that a concentration of $LiPF_6$ could be 1 M, the mixed non-aqueous solvent being obtained by mixing ethylene carbonate (EC) and diethyl carbonate (DEC) with each other in a volume ratio of 1: 1.

[3] Charge/discharge test of battery

The following charge/discharge test was implemented for the respective batteries obtained as described above. Results of this are shown in Table 1-1 and Table 1-2 in combination.

That is to say, by using a charge/discharge tester (HJ0501SM8A made by Hokuto Denko Corporation), in a thermostat oven (PFU-3K made be Espec Corporation) set at a temperature of 300 K (27°C), each of the batteries was charged with a voltage from 2V to 10mV at a current of 0.1 mA in a charge process (Li insertion process to the negative electrode as an evaluation target) while setting a constant current/constant voltage mode. Thereafter, in a discharge process (Li elimination process from the above-described negative electrode), each of the batteries was discharged with a voltage from 10mV to 2V at a current of 0.1mA while setting a constant current mode. Such a charge/discharge cycle as described above was taken as one cycle, and this was repeated 100 times.

Then, discharge capacities in a 50th cycle and a 100th cycle were obtained, and retention rates thereof with respect to a discharge capacity in a first cycle were calculated. Results of this are shown in Table 1 in combination. In this event, as the discharge capacities, values calculated per alloy weight are shown. Note that the "discharge capacity (mAh/g)" is a value per weight of the pure Si or the alloy, and represents a capacity when Li reacts with the Si-Sn-M alloy (Si-Sn alloy, pure Si or Si-Sn alloy). Note that, in this specification, those written as the "initial capacity" correspond to the "discharge capacity (mAh/g)" in the initial cycle (first cycle).

Moreover, the "discharge capacity retention rate (%)" in each of the 50th cycle and the 100th cycle represents an index as to "what capacity is maintained from the initial capacity". A calculation formula of the discharge capacity retention rate (%) is as follows.

[Math. 1]

$$\text{Discharge capacity retention rate (\%)} = \text{discharge capacity in 50th cycle or}$$

$$\text{100th cycle / discharge capacity in first cycle} \times 100$$

[Table 1-1]

| | COMPOSITION | | | 1st cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Reference Example 1 | 50 | 19 | 31 | 1753 | 92 | 55 |
| Reference Example 2 | 45 | 17 | 38 | 1743 | 93 | 57 |
| Reference Example 3 | 42 | 16 | 42 | 1720 | 95 | 58 |
| Reference Example 4 | 41 | 16 | 43 | 1707 | 95 | 61 |
| Reference Example 5 | 44 | 35 | 21 | 2077 | 95 | 55 |
| Reference Example 6 | 42 | 33 | 25 | 1957 | 93 | 55 |

(continued)

| | COMPOSITION | | | 1st cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Reference Example 7 | 38 | 29 | 33 | 1949 | 93 | 55 |
| Reference Example 8 | 37 | 29 | 34 | 1939 | 93 | 56 |
| Reference Example 9 | 36 | 28 | 36 | 1994 | 94 | 60 |
| Reference Example 10 | 37 | 45 | 18 | 2004 | 96 | 56 |
| Reference Example 11 | 35 | 41 | 24 | 1996 | 95 | 55 |
| Reference Example 12 | 34 | 41 | 25 | 1985 | 95 | 56 |
| Reference Example 13 | 33 | 40 | 27 | 1893 | 96 | 56 |
| Reference Example 14 | 31 | 38 | 31 | 1880 | 96 | 62 |

[Table 1-2]

| | COMPOSITION | | | 1st cycle | 50th cycle | 100th cycle |
|---|---|---|---|---|---|---|
| | Si (%) | Sn (%) | Al (%) | Discharge capacity (mAh/g) | Discharge capacity retention rate (%) | Discharge capacity retention rate (%) |
| Comparative Reference Example 1 | 100 | 0 | 0 | 3232 | 47 | 22 |
| Comparative Reference Example 2 | 56 | 44 | 0 | 1817 | 91 | 42 |
| Comparative Reference Example 3 | 45 | 55 | 0 | 1492 | 91 | 42 |
| Comparative Reference Example 4 | 38 | 62 | 0 | 1325 | 91 | 42 |
| Comparative Reference Example 5 | 61 | 0 | 39 | 1747 | 41 | 39 |

(continued)

|  | COMPOSITION | | | 1st cycle | 50th cycle | 100th cycle |
|---|---|---|---|---|---|---|
|  | Si (%) | Sn (%) | Al (%) | Discharge capacity (mAh/g) | Discharge capacity retention rate (%) | Discharge capacity retention rate (%) |
| Comparative Reference Example 6 | 72 | 0 | 28 | 2119 | 45 | 38 |
| Comparative Reference Example 7 | 78 | 0 | 22 | 2471 | 45 | 27 |
| Comparative Reference Example 8 | 87 | 0 | 13 | 2805 | 44 | 17 |
| Comparative Reference Example 9 | 97 | 0 | 3 | 3031 | 47 | 17 |

From Table 1-1 and Table 1-2, it is understood that, in each of the batteries in Reference examples 1 to 14, a balance between the discharge capacity in the first cycle, the discharge capacity retention rate in the 50th cycle and the discharge capacity retention rate in the 100th cycle is excellent. That is to say, it is found out that the above-described balance is excellent when Si occupies 12 mass% or more to less than 100 mass%, Sn occupies more than 0 mass% to 45 mass% or less, and Al occupies more than 0 mass% to 43 mass% or less. As opposed to this, it is understood that, in each of the batteries in Comparative reference examples 1 to 9, the lowering of the discharge capacity retention rate is remarkable even if the discharge capacity in the first cycle is large in comparison with the batteries of Reference examples.

When the results described above are summarized, the following are confirmed in each of the batteries of Reference examples, which use the Si-Sn-Al-based alloys, in which the respective components are within the specific ranges of the present invention, as the negative electrode active materials. That is to say, it is confirmed that such a battery has a high initial capacity exceeding 1700 mAh/g, exhibits discharge capacity retention rates of 92% or more in the 50th cycle and of 55% or more even in the 100th cycle, and is excellent in balance between the capacity and the cycle durability. As opposed to this, in each of the batteries of Comparative reference examples, numeric values of both of the initial capacity and the cycle durability result in falling down below the above-described numeric values in Reference examples. In particular, it is found out that the alloy approximate to the pure Si is inferior in cycle characteristics though has a high capacity. Moreover, it is found out that the alloy with a high Sn content is inferior in initial capacity though is relatively excellent in cycle characteristics.

(Reference example B): Performance evaluation for $Si_xSn_yV_zA_a$

[1] Fabrication of negative electrode

"Al: diameter of 50.8 mm; thickness of 3 mm" in the targets in (1) of Reference example A was changed to "V: diameter of 50.8 mm; thickness of 3 mm", and "Sn (0 to 40 W), Al (0 to 150 W)" of the DC power supply in (2) thereof was changed to "Sn (0 to 50 W), V (0 to 150 W)". In a similar way to Reference example A except the above, totally 32 types of negative electrode samples were obtained (refer to Reference examples 15 to 27 and Comparative reference examples 10 to 28 in Reference example B).

Note that, with regard to (2) described above, several examples of fabricating the samples are illustrated. In Reference example 25, the DC power supply 1 (Si target) was set to 185 W, the DC power supply 2 (Sn target) was set to 30 W, and the DC power supply 3 (V target) was set to 140 W. Moreover, in Comparative reference example 19, the DC power supply 1 (Si target) was set to 185 W, the DC power supply 2 (Sn target) was set to 30 W, and the DC power supply 3 (V target) was set to 0 W. Furthermore, in Comparative reference example 25, the DC power supply 1 (Si target) was set to 185 W, the DC power supply 2 (Sn target) was set to 0 W, and the DC power supply 3 (V target) was set to 80 W.

Component compositions of these alloy thin films are shown in Table 2-1, Table 2-2 and FIGS. 7 to 10. Note that the obtained alloy thin films were analyzed by using an analysis method and an analysis device, which are similar to those in Reference example A.

[2] Fabrication of battery

CR2032-type coin cells were fabricated in a similar way to Reference example A.

[3] Charge/discharge test of battery

A charge/discharge test was implemented for the batteries in a similar way to Reference example A. Results of this are shown in Table 2-1 and Table 2-2 in combination.

[Table 2-1]

| | COMPOSITION | | | 1st cycle | 50th cycle | 100th cycle |
|---|---|---|---|---|---|---|
| | Si (%) | Sn (%) | V (%) | Discharge capacity (mAh/g) | Discharge capacity retention rate (%) | Discharge capacity retention rate (%) |
| Reference Example 15 | 43 | 34 | 23 | 1532 | 93 | 47 |
| Reference Example 16 | 37 | 29 | 32 | 1316 | 92 | 46 |
| Reference Example 17 | 33 | 26 | 41 | 1087 | 92 | 49 |
| Reference Example 18 | 27 | 21 | 52 | 832 | 92 | 46 |
| Reference Example 19 | 32 | 39 | 29 | 1123 | 92 | 47 |
| Reference Example 20 | 29 | 35 | 36 | 1023 | 93 | 48 |
| Reference Example 21 | 52 | 20 | 28 | 1682 | 92 | 45 |
| Reference Example 22 | 44 | 17 | 39 | 1356 | 92 | 47 |
| Reference Example 23 | 38 | 14 | 48 | 1103 | 93 | 48 |
| Reference Example 24 | 34 | 13 | 53 | 931 | 93 | 50 |
| Reference Example 25 | 30 | 11 | 59 | 821 | 94 | 51 |

(continued)

|  | COMPOSITION | | | 1st cycle | 50th cycle | 100th cycle |
|---|---|---|---|---|---|---|
|  | Si (%) | Sn (%) | V (%) | Discharge capacity (mAh/g) | Discharge capacity retention rate (%) | Discharge capacity retention rate (%) |
| Reference Example 26 | 27 | 10 | 63 | 712 | 92 | 44 |
| Reference Example 27 | 31 | 63 | 6 | 1135 | 92 | 46 |

[Table 2-2]

|  | COMPOSITION | | | 1st cycle | 50th cycle | 100th cycle |
|---|---|---|---|---|---|---|
|  | Si (%) | Sn (%) | V (%) | Discharge capacity (mAh/g) | Discharge capacity retention rate (%) | Discharge capacity retention rate (%) |
| Comparative Reference Example 10 | 25 | 19 | 56 | 749 | 89 | 36 |
| Comparative Reference Example 11 | 24 | 29 | 47 | 795 | 90 | 38 |
| Comparative Reference Example 12 | 22 | 27 | 51 | 680 | 86 | 28 |
| Comparative Reference Example 13 | 25 | 52 | 23 | 872 | 88 | 34 |
| Comparative Reference Example 14 | 23 | 48 | 29 | 809 | 88 | 33 |
| Comparative Reference Example 15 | 22 | 44 | 34 | 733 | 86 | 28 |
| Comparative Reference Example 16 | 20 | 41 | 39 | 685 | 78 | 18 |
| Comparative Reference Example 17 | 19 | 38 | 43 | 563 | 73 | 11 |
| Comparative Reference Example 18 | 100 | 0 | 0 | 3232 | 47 | 22 |
| Comparative Reference Example 19 | 56 | 44 | 0 | 1817 | 91 | 42 |

(continued)

| | COMPOSITION | | | 1st cycle | 50th cycle | 100th cycle |
|---|---|---|---|---|---|---|
| | Si (%) | Sn (%) | V (%) | Discharge capacity (mAh/g) | Discharge capacity retention rate (%) | Discharge capacity retention rate (%) |
| Comparative Reference Example 20 | 45 | 55 | 0 | 1492 | 91 | 42 |
| Comparative Reference Example 21 | 38 | 62 | 0 | 1325 | 91 | 42 |
| Comparative Reference Example 22 | 65 | 0 | 35 | 1451 | 85 | 40 |
| Comparative Reference Example 23 | 53 | 0 | 47 | 1182 | 85 | 42 |
| Comparative Reference Example 24 | 45 | 0 | 55 | 986 | 83 | 39 |
| Comparative Reference Example 25 | 34 | 0 | 66 | 645 | 90 | 44 |
| Comparative Reference Example 26 | 30 | 0 | 70 | 564 | 88 | 44 |
| Comparative Reference Example 27 | 27 | 0 | 73 | 495 | 86 | 36 |
| Comparative Reference Example 28 | 25 | 0 | 75 | 366 | 86 | 39 |

From Table 2-1 and Table 2-2, it is understood that, in each of the batteries in Reference examples 15 to 27 in Reference example B, a balance between the discharge capacity in the first cycle, the discharge capacity retention rate in the 50th cycle and the discharge capacity retention rate in the 100th cycle is excellent. That is to say, it is found out that the above-described balance is excellent when Si occupies 27 mass% or more to less than 100 mass%, Sn occupies more than 0 mass% to 73 mass% or less, and V occupies more than 0 mass% to 73 mass% or less. As opposed to this, it is understood that, in each of the batteries in Comparative reference examples 10 to 28 in Reference example B, the lowering of the discharge capacity retention rate is remarkable even if the discharge capacity in the first cycle is large in comparison with the batteries of Reference examples.

When the results described above are summarized, the following are confirmed in each of the batteries of Reference examples 15 to 27 in Reference example B. That is to say, it is confirmed that such a battery exhibits an initial capacity of 712 mAh/g or more and discharge capacity retention rates of 92% or more after the 50 cycles and of 44% or more after the 100 cycles.

(Reference example C): Performance evaluation for $Si_xSn_yC_zA_a$

[1] Fabrication of negative electrode

"Al: diameter of 50.8 mm; thickness of 3 mm" in the targets in (1) of Reference example A was changed to "C: diameter of 50.8 mm; thickness of 3 mm (with backing plate made of oxygen-free copper with thickness of 2 mm)", and "Al (0 to 150 W)" of the DC power supply in (2) thereof was changed to "C (0 to 50 W)". In a similar way to Reference example A except the above, totally 34 types of negative electrode samples were obtained (refer to Reference examples 28 to 49 and Comparative reference examples 29 to 40 in Reference example C).

Note that, with regard to (2) described above, several examples of fabricating the samples are illustrated. In Reference example 43, the DC power supply 1 (Si target) was set to 185 W, the DC power supply 2 (Sn target) was set to 35 W, and the DC power supply 3 (C target) was set to 110 W. Moreover, in Comparative reference example 30, the DC power supply 1 (Si target) was set to 185 W, the DC power supply 2 (Sn target) was set to 22 W, and the DC power supply 3 (C target) was set to 0 W. Furthermore, in Comparative reference example 35, the DC power supply 1 (Si target) was set to 185 W, the DC power supply 2 (Sn target) was set to 0 W, and the DC power supply 3 (C target) was set to 30 W.

Component compositions of these alloy thin films are shown in Table 3-1, Table 3-2 and FIG. 11. Note that the obtained alloy thin films were analyzed by using an analysis method and an analysis device, which are similar to those in Reference example A.

[2] Fabrication of battery

CR2032-type coin cells were fabricated in a similar way to Reference example A.

[3] Charge/discharge test of battery

A charge/discharge test was implemented for the batteries in a similar way to Reference example A. Results of this are shown in Table 3-1 and Table 3-2 in combination.

[Table 3-1]

| | COMPOSITION | | | 1st cycle | 50th cycle | 100th cycle |
|---|---|---|---|---|---|---|
| | Si (%) | Sn (%) | C (%) | Discharge capacity (mAh/g) | Discharge capacity retention rate (%) | Discharge capacity retention rate (%) |
| Reference Example 28 | 63 | 23 | 14 | 2134 | 92 | 45 |
| Reference Example 29 | 57 | 21 | 22 | 2005 | 92 | 47 |
| Reference Example 30 | 50 | 19 | 31 | 1632 | 92 | 48 |
| Reference Example 31 | 48 | 18 | 34 | 1628 | 92 | 49 |
| Reference Example 32 | 44 | 17 | 39 | 1571 | 92 | 50 |
| Reference Example 33 | 38 | 14 | 48 | 1262 | 92 | 51 |
| Reference Example 34 | 50 | 39 | 11 | 1710 | 92 | 48 |
| Reference Example 35 | 46 | 36 | 18 | 1582 | 96 | 49 |

(continued)

| | COMPOSITION | | | 1st cycle | 50th cycle | 100th cycle |
|---|---|---|---|---|---|---|
| | Si (%) | Sn (%) | C (%) | Discharge capacity (mAh/g) | Discharge capacity retention rate (%) | Discharge capacity retention rate (%) |
| Reference Example 36 | 39 | 31 | 30 | 1310 | 95 | 52 |
| Reference Example 37 | 35 | 28 | 37 | 1250 | 92 | 52 |
| Reference Example 38 | 33 | 25 | 42 | 1089 | 92 | 52 |
| Reference Example 39 | 40 | 48 | 12 | 1741 | 97 | 55 |
| Reference Example 40 | 39 | 46 | 15 | 1685 | 98 | 56 |
| Reference Example 41 | 36 | 44 | 20 | 1583 | 97 | 57 |
| Reference Example 42 | 35 | 43 | 22 | 1525 | 96 | 55 |
| Reference Example 43 | 34 | 41 | 25 | 1466 | 99 | 60 |
| Reference Example 44 | 33 | 40 | 27 | 1456 | 97 | 57 |
| Reference Example 45 | 32 | 39 | 29 | 1423 | 96 | 57 |
| Reference Example 46 | 32 | 38 | 30 | 1403 | 97 | 58 |
| Reference Example 47 | 31 | 37 | 32 | 1381 | 98 | 60 |
| Reference Example 48 | 29 | 35 | 36 | 1272 | 97 | 60 |
| Reference Example 49 | 29 | 34 | 37 | 1184 | 98 | 59 |

[Table 3-2]

| | COMPOSITION | | | 1st cycle | 50th cycle | 100th cycle |
|---|---|---|---|---|---|---|
| | Si (%) | Sn (%) | C (%) | Discharge capacity (mAh/g) | Discharge capacity retention rate (%) | Discharge capacity retention rate (%) |
| Comparative Reference Example 29 | 100 | 0 | 0 | 3232 | 47 | 22 |
| Comparative Reference Example 30 | 89 | 11 | 0 | 3149 | 78 | 36 |
| Comparative Reference Example 31 | 77 | 23 | 0 | 2622 | 84 | 38 |
| Comparative Reference Example 32 | 56 | 44 | 0 | 1817 | 91 | 42 |
| Comparative Reference Example 33 | 45 | 55 | 0 | 1492 | 91 | 42 |
| Comparative Reference Example 34 | 38 | 62 | 0 | 1325 | 91 | 42 |
| Comparative Reference Example 35 | 95 | 0 | 5 | 3284 | 58 | 37 |
| Comparative Reference Example 36 | 84 | 0 | 16 | 3319 | 64 | 38 |
| Comparative Reference Example 37 | 72 | 0 | 28 | 3319 | 51 | 29 |
| Comparative Reference Example 38 | 70 | 0 | 30 | 3409 | 68 | 33 |
| Comparative Reference Example 39 | 67 | 0 | 33 | 3414 | 54 | 27 |
| Comparative Reference Example 40 | 63 | 0 | 37 | 3360 | 59 | 27 |

As a result of the above, it is confirmed that each of the batteries of Reference examples 28 to 49 in Reference example C, which uses the Si-Sn-C-based alloy as the negative electrode active material, the Si-Sn-C-based alloy containing 29 mass% or more of Si and containing Sn, C and inevitable impurities as residues, has an initial capacity of at least more than 1000 mAh/g, and exhibits discharge capacity retention rates of 92% or more after the 50 cycles and of 45% or more even in the 100 cycles (for comparison, refer to Comparative reference examples 29 to 40 in Reference example C).

Next, in Example 1 to be described below, performance evaluation was performed for each negative electrode for an electrical device, in which $Si_{41}Sn_{16}Al_{43}$ (corresponding to Reference example 4) in the above-described Si alloy is used as a negative electrode active material, and the elongation of the negative electrode active material layer is changed (specifically, a negative electrode active material layer in which the type of the electrically-conductive auxiliary agent or the like is changed is provided).

Note that, also with regard to other alloys than $Si_{41}Sn_{16}Al_{43}$, which are used in the present invention (that is, those other than $Si_{41}Sn_{16}Al_{43}$ among $Si_xSn_yAl_zA_a$, $Si_xSn_yV_zA_a$ and $Si_xSn_yC_zA_a$), the same or similar results as or to those in Examples 1 to 4 using $Si_{41}Sn_{16}Al_{43}$ are obtained. A reason for this is that, as shown in Reference examples A to C, the above-described other alloys for use in the present invention have characteristics similar to those of $Si_{41}Sn_{16}Al_{43}$. That is to say, in a case of using alloys having similar characteristics, similar effects can be obtained even if the type of the alloy is changed.

(Example 1-1)

[Manufacturing of Si alloy]

The Si alloy was manufactured by the mechanical alloy method (or the arc plasm fusion method). Specifically, a planetary ball mill apparatus P-6 made by Fritsch GmbH in Germany was used, zirconia-made milling balls and powders of the respective raw materials of the alloy were poured into a zirconia-made milling pot, and an alloy was made at 600 rpm for 48 hours.

[Fabrication of negative electrode]

90 mass parts of the negative electrode active material, 5 mass parts of the electrically-conductive auxiliary agent and 5 mass parts of the binder were mixed with one another, and were dispersed into N-methyl-2-pyrrolidone (NMP), whereby negative electrode slurry was obtained. Here, for the negative electrode active material, the Si alloy ($Si_{41}Sn_{16}Al_{43}$; mean particle diameter of 0.3 $\mu$m) fabricated as described above was used. Moreover, for the electrically-conductive auxiliary agent, short chain-like acetylene black was used as the short chain-like carbon black, and for the binder, polyimide (E elastic modulus of 2.1 GPa) was used. Subsequently, the obtained negative electrode slurry was uniformly coated on both surfaces of a negative electrode current collector, which was made of copper foil (elastic elongation of 1.4%) with a thickness of 10 $\mu$m, so that a thickness of the negative electrode active material layers could be 30 $\mu$m, followed by drying in vacuum for 24 hours, whereby a negative electrode was obtained.

[Fabrication of positive electrode]

90 mass parts of the positive electrode active material, 5 mass parts of the electrically-conductive auxiliary agent and 5 mass parts of the binder were mixed with one another, and were dispersed into NMP, whereby positive electrode slurry was obtained. Here, for the positive electrode active material, $Li_{1.85}Ni_{0.18}Co_{0.10}Mn_{0.87}O_3$ was prepared by the method described in Example 1 (paragraph 0046) of Japanese Patent Unexamined Publication No. 2012-185913. Moreover, acetylene black was used for the electrically-conductive auxiliary agent, and polyvinylidene fluoride (PVdF) was used for the binder. Subsequently, the obtained positive electrode slurry was uniformly coated on both surfaces of a positive electrode current collector, which was made of aluminum foil with a thickness of 20 $\mu$m, so that a thickness of the positive electrode active material layers could be 30 $\mu$m, followed by drying, whereby a positive electrode was obtained.

[Fabrication of battery]

The positive electrode and the negative electrode, which were fabricated as described above, were opposed to each other, and a separator (polypropylene-made microporous membrane; membrane thickness of 20 $\mu$m) was arranged therebetween. Subsequently, a laminated body of the negative electrode, the separator and the positive electrode was arranged on a bottom side of a coin cell (CR2032; material: stainless steel (SUS316). Moreover, a gasket was attached in order to keep insulating properties between the positive electrode and the negative electrode, the following electrolytic solution was injected thereinto by a syringe. Then, springs and spacers were stacked, upper sides of such coin cells were superimposed on one another, and were hermetically sealed by crimping the same, whereby a lithium ion secondary battery was obtained.

Note that, as the above-described electrolytic solution, a solution was used, which was obtained by dissolving lithium phosphate hexafluoride ($LiPF_6$) as the supporting salt into an organic solvent so that a concentration thereof could be 1 mol/L. Here, the organic solvent was obtained by mixing ethylene carbonate (EC) and diethyl carbonate (DEC) in a ratio of EC:DEC = 1:2 (volume ratio).

(Example 1-2)

A negative electrode and a battery were fabricated in a similar way to Example 1-1 except that the electrically-conductive auxiliary agent of the negative electrode was changed to carbon nanotube as liquid phase carbon fiber.

(Example 1-3)

A negative electrode and a battery were fabricated in a similar way to Example 1-1 except that the electrically-conductive auxiliary agent of the negative electrode was changed to graphite fiber as vapor phase carbon fiber.

(Comparative example 1-1)

A negative electrode and a battery were fabricated in a similar way to Example 1-1 except that the electrically-conductive auxiliary agent of the negative electrode was changed to long chain-like acetylene black as long chain-like carbon black.

(Comparative example 1-2)

A negative electrode and a battery were fabricated in a similar way to Example 1-1 except that the electrically-conductive auxiliary agent of the negative electrode was changed to artificial graphite.

(Comparative example 1-3)

A negative electrode and a battery were fabricated in a similar way to Example 1-1 except that the electrically-conductive auxiliary agent of the negative electrode was changed to Ketjen Black.

(Comparative example 1-4)

A negative electrode and a battery were fabricated in a similar way to Example 1-1 except that the electrically-conductive auxiliary agent of the negative electrode was changed to graphite fiber as liquid phase carbon fiber, and that the negative electrode active material was changed to pure Si (purity of 99.999%).

(Comparative example 1-5)

A negative electrode and a battery were fabricated in a similar way to Example 1-1 except that the negative electrode active material was changed to pure Si (purity of 99.999%), and that the binder of the negative electrode was changed to PVdF.

[Measurement of elongation (%) of negative electrode active material layer]

For each of the lithium ion secondary batteries fabricated as described above, the elongation (%) of the negative electrode active material layer was measured. Specifically, the elongation (%) of the negative electrode active material layer was measured by a value measured in accordance with the tensile test method of JIS K 7163 (1994). Note that, also for each of the lithium ion secondary batteries fabricated in the following Examples and Comparative examples, the elongation (%) of the negative electrode active material layer was measured in a similar way to the above.

<Performance evaluation>

[Evaluation of cycle characteristics]

For each of the lithium ion secondary batteries fabricated as described above, the cycle characteristics were evaluated in the following way. Under an atmosphere of 30°C, each battery was charged with up to 2.0V in a constant current mode (CC; current of 0.1 C), was left standing for 10 minutes, thereafter, was discharged to 0.01V by a constant current (CC; current of 0.1 C), and was left standing for 10 minutes after the discharge. This charge/discharge process was taken as one cycle, a charge/discharge test of 100 cycles was performed, and a ratio of a discharge capacity in a 100th cycle with respect to a discharge capacity in a first cycle (discharge capacity retention rate [%]) was obtained. A discharge capacity retention rate in Comparative example 1-1 was taken as 100, and a ratio of a discharge capacity retention rate of each of other Examples and Comparative examples with respect thereto was defined as an improvement rate of a discharge capacity (%). Results thus obtained are shown in the following Table 4 and FIG. 18.

[Table 4]

|  | Type of negative electrode active material | Type of negative electrode binder | Type of negative electrode electrically-conductive auxiliary agent | Elongation of negative electrode active material layer (%) | Improvement rate of Discharge capacity (%) (Comparative example 1-1 is taken as 100) |
|---|---|---|---|---|---|
| Example 1-1 | Si alloy | polyimide | short chain-like carbon black | 1.53 | 123 |
| Example 1-2 | Si alloy | polyimide | liquid phase carbon fiber | 1.57 | 120 |
| Example 1-3 | Si alloy | polyimide | vapor phase carbon fiber | 1.40 | 106 |
| Comparative Example 1-1 | Si alloy | polyimide | long chain-like carbon black | 1.70 | 100 |
| Comparative Example 1-2 | Si alloy | polyimide | artificial graphite | 1.29 | 95 |
| Comparative Example 1-3 | Si alloy | polyimide | Ketjen Black | 1.23 | 95 |
| Comparative Example 1-4 | Pure Si | polyimide | vapor phase carbon fiber | 1.70 | 75 |
| Comparative Example 1-5 | Pure Si | PVdF | short chain-like carbon black | 1.50 | 53 |

From the results of the above-described Table 4 and FIG. 18, the ternary Si-Sn-M-based alloy is applied to the negative electrode active material, and further, the appropriate type of the binder and the appropriate type of the electrically-conductive auxiliary agent are combined therewith, whereby the elongation of the negative electrode active material layer can be set within the predetermined range. It is understood that the improvement of improvement rate of the discharge capacity can be achieved by setting the elongation ($\delta$) of the negative electrode active material layer within the range of $1.29 < \delta < 1.70\%$. The elongation ($\delta$) is set within a range of $1.40 \leq \delta < 1.70\%$, preferably $1.40 \leq \delta \leq 1.66\%$, more preferably $1.40 \leq \delta \leq 1.57\%$, still more preferably $1.47 \leq \delta \leq 1.57\%$, particularly preferably $1.53 \leq \delta \leq 1.57\%$, whereby improvement rate of the discharge capacity can be further improved (refer to Examples 1-1 to 1-3 and Comparative examples 1-1 to 1-3 in comparison with each other).

In particular, it was also able to be confirmed that, as the negative electrode active material, the ternary Si-Sn-M-based alloy was used in place of the pure Si, whereby the improvement of the improvement rate of the discharge capacity could be remarkably achieved (refer to FIG. 18 where a graph of Examples 1-1 to 1-3 and Comparative examples 1-1 to 1-3 and data of Comparative examples 1-4 and 1-5 are spaced apart from each other).

REFERENCE SIGNS LIST

10, 50 LITHIUM ION SECONDARY BATTERY (LAMINATED BATTERY)
11 POSITIVE ELECTRODE CURRENT COLLECTOR
12 NEGATIVE ELECTRODE CURRENT COLLECTOR
13 POSITIVE ELECTRODE ACTIVE MATERIAL LAYER
15 NEGATIVE ELECTRODE ACTIVE MATERIAL LAYER
17 ELECTROLYTE LAYER
19 SINGLE CELL LAYER
21, 57 POWER GENERATION ELEMENT
25, 58 POSITIVE ELECTRODE CURRENT COLLECTOR PLATE
27, 59 NEGATIVE ELECTRODE CURRENT COLLECTOR PLATE

29, 52 BATTERY EXTERIOR MEMBER (LAMINATED FILM)

**Claims**

1. A negative electrode for an electrical device, comprising:

   a current collector (12); and
   an electrode layer (15) containing a negative electrode active material, an electrically-conductive auxiliary agent and a binder and formed on a surface of the current collector (12),
   wherein the negative electrode active material contains an alloy represented by a following formula (1):

   $$Si_xSn_yM_zA_a \qquad (1)$$

   in the formula (1), M is Al,

   A is impurity, and
   x, y, z and a represent mass percent values and satisfy wherein x is 31 or more to 50 or less, y is more than 0 to 45 or less, and z is more than 0 to 43 or less, $0 \leq a < 0.5$ and x+y+z+a = 100,

   wherein the electrically-conductive auxiliary agent includes a short chain or a fibrous electrically-conductive auxiliary agent,
   **characterized in that**
   elongation ($\delta$) of the electrode layer (15), measured in accordance with a tensile test method of JIS K 7163 (1994), is 1.29 < $\delta$ < 1.70%, and
   wherein the binder contains resin with an E elastic modulus from more than 1.00 GPa to less than 7.40 GPa, wherein the resin with an E elastic modulus from more than 1.00 GPa to less than 7.40 GPa is one or two or more selected from the group consisting of polyimide, polyamide imide and polyamide.

2. A negative electrode for an electrical device, comprising:

   a current collector (12); and
   an electrode layer (15) containing a negative electrode active material, an electrically-conductive auxiliary agent and a binder and formed on a surface of the current collector (12),
   wherein the negative electrode active material contains an alloy represented by a following formula (1):

   $$Si_xSn_yM_zA_a \qquad (1)$$

   in the formula (1), M is V,

   A is impurity, and
   x, y, z and a represent mass percent values and satisfy x is 27 or more to less than 100, y is more than 0 to 73 or less, and z is more than 0 to 73 or less, $0 \leq a < 0.5$ and x+y+z+a = 100,

   wherein the electrically-conductive auxiliary agent includes a short chain or a fibrous electrically-conductive auxiliary agent,
   **characterized in that**
   elongation ($\delta$) of the electrode layer (15), measured in accordance with a tensile test method of JIS K 7163 (1994), is 1.29 < $\delta$ < 1.70%, and
   wherein the binder contains resin with an E elastic modulus from more than 1.00 GPa to less than 7.40 GPa wherein the resin with an E elastic modulus from more than 1.00 GPa to less than 7.40 GPa is one or two or more selected from the group consisting of polyimide, polyamide imide and polyamide.

3. A negative electrode for an electrical device, comprising:

   a current collector (12); and
   an electrode layer (15) containing a negative electrode active material, an electrically-conductive auxiliary agent and a binder and formed on a surface of the current collector (12),

wherein the negative electrode active material contains an alloy represented by a following formula (1):

$$Si_xSn_yM_zA_a \qquad (1)$$

in the formula (1), M is C,

A is impuritiy, and
x, y, z and a represent mass percent values and satisfy $29 \leq x < 100$, $0 < y < 100$, $0 < z < 100$, $0 \leq a < 0.5$ and x+y+z+a = 100, and

wherein the electrically-conductive auxiliary agent includes a short chain or a fibrous electrically-conductive auxiliary agent,
**characterized in that**
elongation ($\delta$) of the electrode layer (15), measured in accordance with a tensile test method of JIS K 7163 (1994), is $1.29 < \delta < 1.70\%$, and
wherein the binder contains resin with an E elastic modulus from more than 1.00 GPa to less than 7.40 GPa, wherein the resin with an E elastic modulus from more than 1.00 GPa to less than 7.40 GPa is one or two or more selected from the group consisting of polyimide, polyamide imide and polyamide.

4.  The negative electrode for an electrical device according to any one of claims 1 to 3, wherein $\delta$ is $1.40 \leq \delta < 1.70\%$.

5.  The negative electrode for an electrical device according to any one of claims 1 to 4, wherein $\delta$ is $1.40 \leq \delta \leq 1.66\%$.

6.  The negative electrode for an electrical device according to any one of claims 1 to 5, wherein $\delta$ is $1.40 \leq \delta \leq 1.57\%$.

7.  The negative electrode for an electrical device according to any one of claims 1 to 6, wherein $\delta$ is $1.47 \leq \delta \leq 1.57\%$.

8.  The negative electrode for an electrical device according to any one of claims 1 to 7, wherein $\delta$ is $1.53 \leq \delta \leq 1.57\%$.

9.  The negative electrode for an electrical device according to any one of claims 1 to 8, wherein elastic elongation of the current collector (12), measured at 25 °C in accordance with a tensile test method of JIS K 6251 (2010), is 1.30% or more.

10. The negative electrode for an electrical device according to any one of claims 1 to 8, wherein the negative electrode active material is composed by mixing the alloy represented by the formula (1) and a carbon-based material with each other.

11. The negative electrode for an electrical device according to claim 1, wherein y is 15 or more, and z is 18 or more.

12. The negative electrode for an electrical device according to claim 2, wherein x is 84 or less, y is 10 or more to 73 or less, and z is 6 or more to 73 or less.

13. The negative electrode for an electrical device according to claim 12, wherein y is 10 or more to 63 or less, and z is 6 or more to 63 or less.

14. The negative electrode for an electrical device according to claim 13, wherein x is 52 or less.

15. The negative electrode for an electrical device according to claim 14, wherein y is 40 or less, and z is 20 or more.

16. The negative electrode for an electrical device according to claim 3, wherein x is 63 or less, y is 14 or more to 48 or less, and z is 11 or more to 48 or less.

17. The negative electrode for an electrical device according to claim 16, wherein x is 44 or less.

18. The negative electrode for an electrical device according to claim 17, wherein x is 40 or less, and y is 34 or more.

19. The negative electrode for an electrical device according to any one of claims 1 to 18, wherein a content of the electrically-conductive auxiliary agent mixed into the electrode layer (15) is in a range of 1 to 10 mass%, and an amount of the binder is 0.5 to 15 mass% with respect to the electrode layer (15).

**20.** An electrical device comprising the negative electrode for an electrical device according to any one of claims 1 to 19.

**Patentansprüche**

**1.** Negativelektrode für eine elektrische Vorrichtung, umfassend:

einen Stromkollektor (12); und
eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine Legierung enthält, die durch folgende Formel (1) dargestellt ist:

$$Si_xSn_yM_zA_a \qquad (1)$$

M in der Formel (1) Al ist,
A eine Verunreinigung ist, und
x, y, z und a Massenprozentwerte darstellen und erfüllen, wobei x größer gleich 31 bis kleiner gleich 50 ist, y größer 0 bis kleiner gleich 45 ist, und z größer 0 bis kleiner gleich 43 ist, $0 \leq a < 0,5$ und $x + y + z + a = 100$,

wobei der elektrisch leitfähige Hilfsstoff einen kurzkettigen oder einen faserförmigen elektrisch leitfähigen Hilfsstoff umfasst,
**dadurch gekennzeichnet, dass**
eine Dehnung ($\delta$) der Elektrodenschicht (15), gemessen gemäß einem Zugtestverfahren nach JIS K 7163 (1994), $1,29 < \delta < 1,70$ % beträgt, und
wobei das Bindemittel ein Harz mit einem E-Elastizitätsmodul von größer als 1,00 GPa bis kleiner als 7,40 GPa enthält,
wobei das Harz mit einem E-Elastizitätsmodul von größer als 1,00 GPa bis kleiner als 7,40 GPa eines oder zwei oder mehr, ausgewählt aus der Gruppe bestehend aus Polyimid, Polyamidimid und Polyamid, ist.

**2.** Negativelektrode für eine elektrische Vorrichtung, umfassend:

einen Stromkollektor (12); und
eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine Legierung enthält, die durch die folgende Formel (1) dargestellt ist:

$$Si_xSn_yM_zA_a \qquad (1)$$

M in der Formel (1) V ist,
A eine Unreinheit ist, und
x, y, z und a Massenprozentwerte darstellen und erfüllen, wobei x größer gleich 27 bis kleiner 100 ist, y größer 0 bis kleiner gleich 73 ist, und z größer 0 bis keiner gleich 73 ist, $0 \leq a < 0,5$ und $x + y + z + a = 100$,

wobei der elektrisch leitfähige Hilfsstoff einen kurzkettigen oder einen faserförmigen elektrisch leitfähigen Hilfsstoffumfasst.
**dadurch gekennzeichnet, dass**
eine Dehnung ($\delta$) der Elektrodenschicht (15), gemessen gemäß einem Zugtestverfahren nach JIS K 7163 (1994), $1,29 < \delta < 1,70$ % beträgt, und
wobei das Bindemittel Harz mit einem E-Elastizitätsmodul von größer als 1,00 GPa bis kleiner als 7,40 GPa enthält
wobei das Harz mit einem E-Elastizitätsmodul von größer als 1,00 GPa bis kleiner als 7,40 GPa eines oder zwei oder mehr, ausgewählt aus der Gruppe bestehend aus Polyimid, Polyamidimid und Polyamid, ist.

3.  Negativelektrode für eine elektrische Vorrichtung, umfassend:

    einen Stromkollektor (12); und
    eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
    wobei das Negativelektroden-Aktivmaterial eine Legierung enthält, die durch die folgende Formel (1) dargestellt ist:

    $$Si_xSn_yM_zA_a \qquad (1)$$

    M in der Formel (1) C ist,
    A eine Unreinheit ist, und
    x, y, z und a Massenprozentwerte darstellen und $29 \leq x < 100$, $0 < y < 100$, $0 < z < 100$, $0 \leq a < 0,5$ und x + y + z + a = 100 erfüllen, und

    wobei der elektrisch leitfähige Hilfsstoff einen kurzkettigen oder einen faserförmigen elektrisch leitfähigen Hilfsstoff umfasst.
    **dadurch gekennzeichnet, dass**
    eine Dehnung ($\delta$) der Elektrodenschicht (15), gemessen gemäß einem Zugtestverfahren nach JIS K 7163 (1994), $1,29 < \delta < 1,70$ % beträgt, und
    wobei das Bindemittel Harz mit einem E-Elastizitätsmodul von größer als 1,00 GPa bis kleiner als 7,40 GPa enthält
    wobei das Harz mit einem E-Elastizitätsmodul von größer als 1,00 GPa bis kleiner als 7,40 GPa eines oder zwei oder mehr, ausgewählt aus der Gruppe bestehend aus Polyimid, Polyamidimid und Polyamid, ist.

4.  Negativelektrode für eine elektrische Vorrichtung nach einem der Ansprüche 1 bis 3, wobei $\delta$ $1,40 \leq \delta < 1,70$ % ist.

5.  Negativelektrode für eine elektrische Vorrichtung nach einem der Ansprüche 1 bis 4, wobei $\delta$ $1,40 \leq \delta \leq 1,66$ % ist.

6.  Negativelektrode für eine elektrische Vorrichtung nach einem der Ansprüche 1 bis 5, wobei $\delta$ $1,40 \leq \delta \leq 1,57$ % ist.

7.  Negativelektrode für eine elektrische Vorrichtung nach einem der Ansprüche 1 bis 6, wobei $\delta$ $1,47 \leq \delta \leq 1,57$ % ist.

8.  Negativelektrode für eine elektrische Vorrichtung nach einem der Ansprüche 1 bis 7, wobei $\delta$ $1,53 \leq \delta \leq 1,57$ % ist.

9.  Negative Elektrode für eine elektrische Vorrichtung nach einem der Ansprüche 1 bis 8, wobei eine elastische Dehnung des Stromkollektors (12), gemessen bei 25°C gemäß einem Zugtestverfahren nach JIS K 6251 (2010) 1,30 % oder mehr beträgt.

10. Negativelektrode für eine elektrische Vorrichtung nach einem der Ansprüche 1 bis 8, wobei das Negativelektroden-Aktivmaterial durch Mischen der durch die Formel (1) dargestellten Legierung und einem Material auf Kohlenstoffbasis miteinander zusammengesetzt ist.

11. Negativelektrode für eine elektrische Vorrichtung nach Anspruch 1, wobei y größer gleich 15 ist und z größer gleich 18 ist.

12. Negativelektrode für eine elektrische Vorrichtung nach Anspruch 2, wobei x kleiner gleich 84 ist, y größer gleich 10 bis kleiner gleich 73 ist, und z größer gleich 6 bis kleiner gleich 73 ist.

13. Negativelektrode für eine elektrische Vorrichtung nach Anspruch 12, wobei y größer gleich 10 bis kleiner gleich 63 ist, und z größer gleich 6 bis kleiner gleich 63 ist.

14. Negativelektrode für eine elektrische Vorrichtung nach Anspruch 13, wobei x kleiner gleich 52 ist.

15. Negativelektrode für eine elektrische Vorrichtung nach Anspruch 14, wobei y kleiner gleich 40 ist, und z größer gleich 20 ist.

**16.** Negativelektrode für eine elektrische Vorrichtung nach Anspruch 3, wobei x kleiner gleich 63 ist, y größer gleich 14 bis kleiner gleich 48 ist, und z größer gleich 11 bis kleiner gleich 48 ist.

**17.** Negativelektrode für eine elektrische Vorrichtung nach Anspruch 16, wobei x kleiner gleich 44 ist.

**18.** Negativelektrode für eine elektrische Vorrichtung nach Anspruch 17, wobei x kleiner gleich 40 ist, und y größer gleich 34 ist.

**19.** Negativelektrode für eine elektrische Vorrichtung nach einem der Ansprüche 1 bis 18, wobei ein Gehalt des in die Elektrodenschicht (15) eingemischten elektrisch leitfähigen Hilfsstoffs in einem Bereich von 1 bis 10 Massen-% liegt, und eine Menge des Bindemittels 0,5 bis 15 Massen-% in Bezug auf die Elektrodenschicht (15) beträgt.

**20.** Elektrische Vorrichtung, welche die Negativelektrode für eine elektrische Vorrichtung nach einem der Ansprüche 1 bis 19 umfasst.

## Revendications

**1.** Électrode négative pour dispositif électrique, comprenant :

un collecteur de courant (12) ; et
une couche d'électrode (15) contenant un matériau actif d'électrode négative, un agent auxiliaire électroconducteur et un liant et formée sur une surface du collecteur de courant (12),
dans laquelle le matériau actif d'électrode négative contient un alliage représenté par la formule (1) suivante :

$$Si_xSn_yM_zA_a \qquad (1)$$

dans la formule (1), M représente un atome d'Al,

A représente une impureté, et
x, y, z et a représentent des valeurs de pourcentage massique et satisfont x est supérieur ou égal à 31 et inférieur ou égal à 50, y est supérieur à 0 et inférieur ou égal à 45, et z est supérieur à 0 et inférieur ou égal à 43, $0 \leq a < 0,5$ et x + y + z + a = 100,

dans laquelle l'agent auxiliaire électroconducteur comporte un agent auxiliaire électroconducteur fibreux ou à chaîne courte,
**caractérisée en ce que**
l'allongement ($\delta$) de la couche d'électrode (15), mesuré conformément à une méthode d'essai de traction de la norme JIS K 7163 (1994), est $1,29 < \delta < 1,70\%$, et
dans laquelle le liant contient une résine ayant un module d'élasticité E supérieur à 1,00 GPa et inférieur à 7,40 GPa,
dans laquelle la résine ayant un module d'élasticité E supérieur à 1,00 GPa et inférieur à 7,40 GPa est une, deux ou plusieurs résine(s) choisie(s) dans le groupe constitué de polyimide, de polyamide-imide et de polyamide.

**2.** Électrode négative pour dispositif électrique, comprenant :

un collecteur de courant (12) ; et
une couche d'électrode (15) contenant un matériau actif d'électrode négative, un agent auxiliaire électroconducteur et un liant et formée sur une surface du collecteur de courant (12),
dans laquelle le matériau actif d'électrode négative contient un alliage représenté par la formule (1) suivante :

$$Si_xSn_yM_zA_a \qquad (1)$$

dans la formule (1), M représente un atome de V,

A représente une impureté, et
x, y, z et a représentent des valeurs de pourcentage massique et satisfont x est supérieur ou égal à 27 et inférieur à 100, y est supérieur à 0 et inférieur ou égal à 73 et z est supérieur à 0 et inférieur ou égal à 73, $0 \leq a < 0{,}5$ et $x + y + z + a = 100$,

dans laquelle l'agent auxiliaire électroconducteur comporte un agent auxiliaire électroconducteur fibreux ou à chaîne courte,

**caractérisée en ce que**

l'allongement ($\delta$) de la couche d'électrode (15), mesuré conformément à une méthode d'essai de traction de la norme JIS K 7163 (1994), est $1{,}29 < \delta < 1{,}70\%$, et

dans laquelle le liant contient une résine ayant un module d'élasticité E supérieur à 1,00 GPa et inférieur à 7,40 GPa,

dans laquelle la résine ayant un module d'élasticité E supérieur à 1,00 GPa et inférieur à 7,40 GPa est une, deux ou plusieurs résine(s) choisie(s) dans le groupe constitué de polyimide, de polyamide-imide et de polyamide.

3. Électrode négative pour dispositif électrique, comprenant :

un collecteur de courant (12) ; et

une couche d'électrode (15) contenant un matériau actif d'électrode négative, un agent auxiliaire électroconducteur et un liant et formée sur une surface du collecteur de courant (12),

dans laquelle le matériau actif d'électrode négative contient un alliage représenté par la formule (1) suivante :

$$Si_xSn_yM_zA_a \qquad (1)$$

dans la formule (1), M représente un atome de C,

A représente une impureté, et

x, y, z et a représentent des valeurs de pourcentage massique et satisfont $29 \leq x < 100$, $0 < y < 100$, $0 < z < 100$, $0 \leq a < 0{,}5$ et $x + y + z + a = 100$, et

dans laquelle l'agent auxiliaire électroconducteur comporte un agent auxiliaire électroconducteur fibreux ou à chaîne courte,

**caractérisée en ce que**

l'allongement ($\delta$) de la couche d'électrode (15), mesuré conformément à une méthode d'essai de traction de la norme JIS K 7163 (1994), est $1{,}29 < \delta < 1{,}70\%$, et

dans laquelle le liant contient une résine ayant un module d'élasticité E supérieur à 1,00 GPa et inférieur à 7,40 GPa,

dans laquelle la résine ayant un module d'élasticité E supérieur à 1,00 GPa et inférieur à 7,40 GPa est une, deux ou plusieurs résine(s) choisie(s) dans le groupe constitué de polyimide, de polyamide-imide et de polyamide.

4. Électrode négative pour dispositif électrique selon l'une quelconque des revendications 1 à 3, dans laquelle $\delta$ satisfait à $1{,}40 \leq \delta < 1{,}70\%$.

5. Électrode négative pour dispositif électrique selon l'une quelconque des revendications 1 à 4, dans laquelle $\delta$ satisfait à $1{,}40 \leq \delta \leq 1{,}66\%$.

6. Électrode négative pour dispositif électrique selon l'une quelconque des revendications 1 à 5, dans laquelle $\delta$ satisfait à $1{,}40 \leq \delta \leq 1{,}57\%$.

7. Électrode négative pour dispositif électrique selon l'une quelconque des revendications 1 à 6, dans laquelle $\delta$ satisfait à $1{,}47 \leq \delta \leq 1{,}57\%$.

8. Électrode négative pour dispositif électrique selon l'une quelconque des revendications 1 à 7, dans laquelle $\delta$ satisfait à $1{,}53 \leq \delta \leq 1{,}57\%$.

9. Électrode négative pour dispositif électrique selon l'une quelconque des revendications 1 à 8, dans laquelle l'allongement élastique du collecteur de courant (12), mesuré à 25°C conformément à une méthode d'essai de traction de la norme JIS K 6251 (2010), est supérieur ou égal à 1,30%.

**10.** Électrode négative pour dispositif électrique selon l'une quelconque des revendications 1 à 8, dans laquelle le matériau actif d'électrode négative est composé en mélangeant l'alliage représenté par la formule (1) et un matériau à base de carbone l'un avec l'autre.

**11.** Électrode négative pour dispositif électrique selon la revendication 1, dans laquelle y est supérieur ou égal à 15 et z est supérieur ou égal à 18.

**12.** Électrode négative pour dispositif électrique selon la revendication 2, dans laquelle x est inférieur ou égal à 84, y est supérieur ou égal à 10 et inférieur ou égal à 73 et z est supérieur ou égal à 6 et inférieur ou égal à 73.

**13.** Électrode négative pour dispositif électrique selon la revendication 12, dans laquelle y est supérieur ou égal à 10 et inférieur ou égal à 63, et z est supérieur ou égal à 6 et inférieur ou égal à 63.

**14.** Électrode négative pour dispositif électrique selon la revendication 13, dans laquelle x est inférieur ou égal à 52.

**15.** Électrode négative pour dispositif électrique selon la revendication 14, dans laquelle y est inférieur ou égal à 40 et z est supérieur ou égal à 20.

**16.** Électrode négative pour dispositif électrique selon la revendication 3, dans laquelle x est inférieur ou égal à 63, y est supérieur ou égal à 14 et inférieur ou égal à 48 et z est supérieur ou égal à 11 et inférieur ou égal à 48.

**17.** Électrode négative pour dispositif électrique selon la revendication 16, dans laquelle x est inférieur ou égal à 44.

**18.** Électrode négative pour dispositif électrique selon la revendication 17, dans laquelle x est inférieur ou égal à 40 et y est supérieur ou égal à 34.

**19.** Électrode négative pour dispositif électrique selon l'une quelconque des revendications 1 à 18, dans laquelle une teneur en agent auxiliaire électroconducteur mélangé dans la couche d'électrode (15) se trouve dans une plage allant de 1 à 10% en masse, et une quantité du liant est comprise entre 0,5 et 15% en masse par rapport à la couche d'électrode (15).

**20.** Dispositif électrique comprenant l'électrode négative pour dispositif électrique selon l'une quelconque des revendications 1 à 19.

# FIG. 1

EP 2 924 779 B1

# FIG. 2

# FIG. 3

# FIG. 4

FIG. 5

## FIG. 6

# FIG. 7

FIG. 8

# FIG. 9

# FIG. 10

# FIG. 11

FIG. 12

# FIG. 13

# FIG. 14

FIG. 15

FIG. 16

## FIG. 17

FIG. 18

FIG. 19

# FIG. 20

# FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010119942 A1
- JP 2007149604 A
- JP 2008016446 A
- JP 2009517850 A
- JP 2012185913 A